(19) Europäisches Patentamt
European Patent Office
Office européen des brevets

(11) EP 4 342 930 B1

(12) **EUROPEAN PATENT SPECIFICATION**

(45) Date of publication and mention of the grant of the patent:
**11.06.2025 Bulletin 2025/24**

(21) Application number: **22804727.0**

(22) Date of filing: **18.05.2022**

(51) International Patent Classification (IPC):
***C08G 65/44*** *(2006.01)* ***B32B 15/08*** *(2006.01)*
***C08G 65/48*** *(2006.01)* ***C08J 5/24*** *(2006.01)*
***C08L 71/12*** *(2006.01)*

(52) Cooperative Patent Classification (CPC):
**C08J 5/244; B32B 15/08; C08G 65/44; C08G 65/485; C08L 71/123; C08L 71/126;**
C08J 2371/12

(86) International application number:
**PCT/JP2022/020718**

(87) International publication number:
**WO 2022/244817 (24.11.2022 Gazette 2022/47)**

(54) **POLYPHENYLENE ETHER, PRODUCTION METHOD THEREFOR, THERMOSETTING COMPOSITION, PREPREG, AND MULTILAYER BODY**

POLYPHENYLENETHER, HERSTELLUNGSVERFAHREN DAFÜR, WÄRMEHÄRTBARE ZUSAMMENSETZUNG, PREPREG UND MEHRSCHICHTIGER KÖRPER

ÉTHER DE POLYPHÉNYLÈNE, SON PROCÉDÉ DE PRODUCTION, COMPOSITION THERMODURCISSABLE, PRÉIMPRÉGNÉ ET CORPS MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2021 JP 2021086490**

(43) Date of publication of application:
**27.03.2024 Bulletin 2024/13**

(73) Proprietor: **Asahi Kasei Kabushiki Kaisha**
**Tokyo 1000006 (JP)**

(72) Inventors:
- **FUKUEN, Shinichi**
  **Tokyo 100-0006 (JP)**
- **TANAKA, Yudai**
  **Tokyo 100-0006 (JP)**

(74) Representative: **Strehl & Partner mbB**
**Maximilianstrasse 54**
**80538 München (DE)**

(56) References cited:
**WO-A1-2009/139336**
**WO-A1-2021/065275**
**JP-A- 2008 239 720**
**JP-A- 2010 047 662**
**JP-A- 2010 260 978**
**JP-A- H02 233 760**
**US-A1- 2008 076 884**
**US-A1- 2009 018 303**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

The present disclosure relates to a polyphenylene ether, a production method of the same, a thermosetting composition, a prepreg, and a laminate.

BACKGROUND

Polyphenylene ethers (herein referred to as "PPEs") are excellent in high-frequency characteristics, flame retardancy, and heat resistance, and they are therefore widely used as materials in electric and electronic fields, automotive fields, materials for products and components in the food and packaging fields, and other industrial material fields. In particular, in recent years, their applications as a modifier for electronic materials such as substrate materials or various applications have been studied by utilizing their low dielectric properties and heat resistance.

However, polyphenylene ethers having high molecular weight and repeating units derived from a monovalent phenol typified by 2,6-dimethylphenol are generally soluble in highly toxic solvents such as chloroform, but are insoluble in aromatic solvents such as toluene, which are known as good solvents. In addition, they are insoluble in ketone-based solvents such as methyl ethyl ketone. This makes it difficult to handle resin varnish solutions such as toluene and methyl ethyl ketone solutions when used as wiring board materials, for example.

PTL 1 discloses that a polyphenylene ether with a low molecular weight and a specific particle size has excellent solubility in solvents such as methyl ethyl ketone.

In addition, PTL 2 discloses a modified polyphenylene ether compound having a predetermined polyphenylene ether moiety in the molecular structure and having at least one or more p-ethenylbenzyl group, m-ethenylbenzyl group, and the like at a molecular terminal thereof.

Further, PTL 3 discloses a modified polymer having a polyphenylene ether moiety in the molecular structure, and having a methacrylic group at a molecular terminal thereof.

PTL 4 discloses a process for producing a low molecular weight polyphenylene ether, a prepreg containing the polyphenylene ether and a laminate obtained from the prepreg. The polyphenylene ether is said to have improved solubility in solvents such as MEK and toluene.

CITATION LIST

Patent Literature

PTL 1: JP 2004-99824 A
PTL 2: JP 2004-339328 A
PTL 3: JP 2008-510059 A
PTL 4: US 2009/018303

SUMMARY

(Technical Problem)

As set forth above, PTLs 1-3 disclose the methods of producing polyphenylene ethers of which molecular weights are lowered to improve the solvent solubility of polyphenylene ethers. However, simply reducing the molecular weights of polyphenylene ethers does not significantly improve their solubility in general-purpose ketone-based solvents such as methyl ethyl ketone at room temperature, and solubility is still insufficient. Methods to improve long-term solvent solubility in ketone-based solvents are demanded. In addition, development of polyphenylene ethers that have excellent solubility in toluene at room temperature even though they have high molecular weight is also demanded.

The present disclosure was conceived of in view of the above issue, and an object thereof is to provide a polyphenylene ether with excellent solubility in general-purpose solvents and a production method of the same.

(Solution to Problem)

Specifically, the present disclosure is as follows:

[1] A polyphenylene ether comprising a repeating unit derived from a phenol of the formula (1):

[Chem. 1]

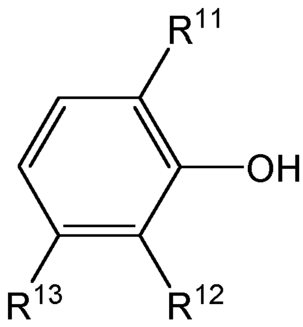

... Formula (1)

(in the formula (1), $R^{13}$ is an optionally substituted saturated or unsaturated hydrocarbon group having a carbon number of 15, $R^{11}$ and $R^{12}$ are each independently one of a hydrogen atom, a linear saturated hydrocarbon group having a carbon number of 1 to 12, and substituents represented by the following formula (3), where $R^{11}$ and $R^{12}$ cannot be both hydrogen atoms):

[Chem. 2]

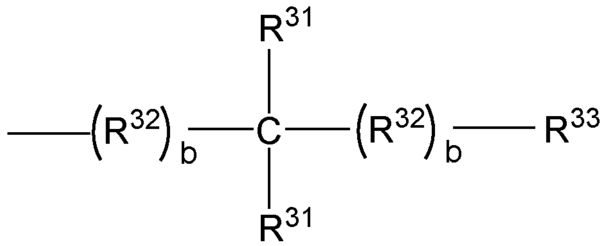

... Formula (3)

(in the formula (3), each $R^{31}$ is independently an optionally substituted linear alkyl group having a carbon number of 1 to 8, or atoms in the two $R^{31}$ are bonded together to form a cyclic alkyl group with a carbon number of 1 to 8, each $R^{32}$ is independently an optionally substituted alkylene group having a carbon number of 1 to 8, b is each independently 0 or 1, and $R^{33}$ is a hydrogen atom, an optionally substituted alkyl group having a carbon number of 1 to 8, or an optionally substituted phenyl group).

[2] The polyphenylene ether according to [1], comprising the repeating unit derived from the phenol of the formula (1) and a repeating unit derived from a phenol of the formula (2):

[Chem. 3]

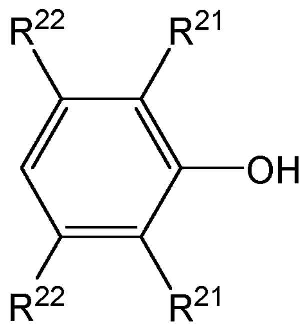

... Formula (2)

(in the formula (2), each $R^{21}$ is independently an optionally substituted saturated hydrocarbon group having a carbon number of 1 to 6, an optionally substituted aryl group having a carbon number of 6 to 12, or a halogen atom, and each $R^{22}$ is independently a hydrogen atom, an optionally substituted hydrocarbon group having a carbon number of 1 to 6, an optionally substituted aryl group having a carbon number of 6 to 12, or a halogen atom).
[3] The polyphenylene ether according to [2], comprising 0.1 to 100 mol% of the repeating unit derived from the phenol of the formula (1) and 0 to 99.9 mol% of the repeating unit derived from the phenol of the formula (2), with respect to 100 mol% of a sum of the repeating unit derived from the phenol of the formula (1) and the repeating unit derived from the phenol of the formula (2).
[4] The polyphenylene ether according to [3], comprising 20 to 100 mol% of the repeating unit derived from the phenol of the formula (1) and 0 to 80 mol% of the repeating unit derived from the phenol of the formula (2), with respect to 100 mol% of the sum of the repeating unit derived from the phenol of the formula (1) and the repeating unit derived from the phenol of the formula (2).
[5] The polyphenylene ether according to any one of [1] to [4], wherein a reduced viscosity ($\eta$sp/c) measured with an Ubbelohde-type viscosity tube in a chloroform solution at a concentration of 0.5 g/dL at 30 °C is 0.03 to 0.90 dL/g.
[6] The polyphenylene ether according to any one of [1] to [5], wherein the $R^{11}$ is a t-butyl group and the $R^{12}$ is a hydrogen atom.
[7] A method of producing the polyphenylene ether according to any one of [1] to [6], the method comprising the step of carrying out oxidative polymerization of the phenol of the formula (1).
[8] A thermosetting composition comprising the polyphenylene ether according to any one of [1] to [6].
[9] A prepreg comprising a base material and the thermosetting composition according to [8].
[10] The prepreg according to [9], wherein the base material is glass cloth.
[11] A laminate comprising a cured product of the prepreg according to [9] or [10] and a metal foil.

(Advantageous Effect)

According to the present disclosure, a polyphenylene ether with excellent solubility in aromatic solvent and general-purpose ketone-based solvents and a production method of the same can be provided. In addition, a thermosetting composition, a prepreg, and a laminate using the polyphenylene ether can also be provided.

DETAILED DESCRIPTION

The following provides details of an embodiment of the present disclosure (hereinafter referred to as "present embodiment"). The present embodiment described below is provided as an illustrative example to facilitate explanation of the present disclosure. However, the present disclosure is not limited to the present embodiment and can be implemented with appropriate alterations within the scope thereof.
In the present embodiment, a polyphenylene ether in which some or all of the hydroxyl groups included in the polyphenylene ether are modified is sometimes simply referred to as "polyphenylene ether". Thus, when the term "polyphenylene ether" is used, it includes both an unmodified polyphenylene ether and a modified polyphenylene ether, unless any contradiction arises.
Note that, in the present specification, the expression "A (value) to B (value)" means A or more and B or less.

<Polyphenylene ether>

A polyphenylene ether of the present embodiment contains a repeating unit derived from a phenol of the following formula (1):

[Chem. 4]

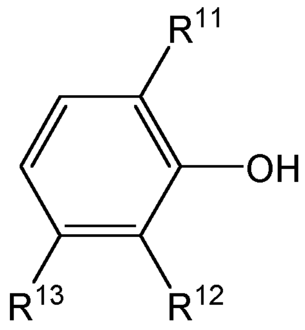

... Formula (1)

(in the formula (1), $R^{13}$ is an optionally substituted saturated or unsaturated hydrocarbon group having a carbon number of 15, $R^{11}$ and $R^{12}$ are each independently one of a hydrogen atom, a linear saturated hydrocarbon group having a carbon number of 1 to 12, and substituents represented by the following formula (3), where $R^{11}$ and $R^{12}$ cannot be both hydrogen atoms).

In the formula (1), $R^{11}$ and $R^{12}$ are each independently at least one selected from the group consisting of a hydrogen atom, a linear saturated hydrocarbon group having a carbon number of 1 to 12, and substituents represented by the formula (3). However, $R^{11}$ and $R^{12}$ cannot be both hydrogen atoms. $R^{11}$ and $R^{12}$ are more preferably each independently selected from a hydrogen atom, a methyl group, an ethyl group, and substituents represented by the formula (3). $R^{11}$ is even more preferably selected from substituents represented by the formula (3) and $R^{12}$ is a hydrogen atom.

**[0013]** [Chem. 5]

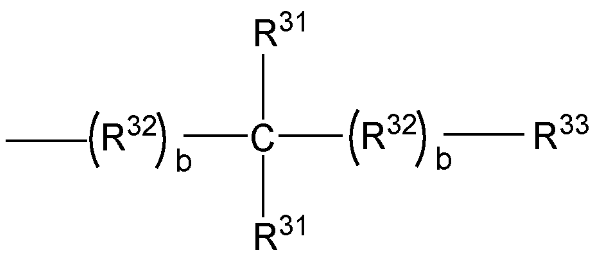

... Formula (3)

(In the formula (3), each $R^{31}$ is independently an optionally substituted linear alkyl group having a carbon number of 1 to 8, or atoms in the two $R^{31}$ are bonded together to form a cyclic alkyl group with a carbon number of 1 to 8, each $R^{32}$ is independently an optionally substituted alkylene group having a carbon number of 1 to 8, b is each independently 0 or 1, and $R^{33}$ is a hydrogen atom, an optionally substituted alkyl group having a carbon number of 1 to 8, or an optionally substituted phenyl group).

The substituent represented by the formula (3) is preferably a group containing secondary and/or tertiary carbon exemplified by an isopropyl group, an isobutyl group, a sec-butyl group, a tert-butyl group, a tert-amyl group, a 2,2-dimethylpropyl group, a cyclohexyl group, and groups in which the hydrogen in the end hydrocarbon group in the groups is substituted with a phenyl group, more preferably a tert-butyl group and a cyclohexyl group, and even more preferably a tert-butyl group. Atoms in these may be bonded together to form a ring structure.

In the present embodiment, a mode where $R^{11}$ is a t-butyl group and $R^{12}$ is a hydrogen atom in the formula (1) is preferred.

In the formula (1), $R^{13}$ is an optionally substituted saturated or unsaturated hydrocarbon group having a carbon number of 15, and is more preferably a mixture where $R^{13}$ is represented by $C_{15}H_{31-2n}$, where n is each independently an integer from 0 to 3.

In addition to the repeating unit derived from the phenol of the formula (1), the polyphenylene ether of the present embodiment may also contain a repeating unit derived from a phenol of the formula (2):

[Chem. 6]

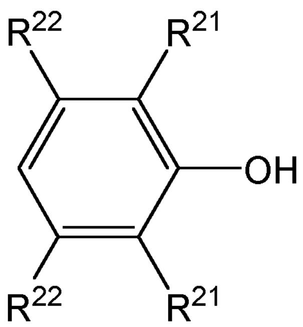

... Formula (2)

(in the formula (2), each $R^{21}$ is independently an optionally substituted saturated hydrocarbon group having a carbon number of 1 to 6, an optionally substituted aryl group having a carbon number of 6 to 12, or a halogen atom, and each $R^{22}$ is independently a hydrogen atom, an optionally substituted hydrocarbon group having a carbon number of 1 to 6, an optionally substituted aryl group having a carbon number of 6 to 12, or a halogen atom).

In the formula (2), each $R^{21}$ is independently preferably a saturated hydrocarbon group having a carbon number of 1 to 6 or an aryl group having a carbon number of 6 to 12, more preferably a methyl group or a phenyl group, even more preferably a methyl group. In the formula (2), both of the two $R^{11}$ preferably have the same structure.

In the formula (2), each $R^{22}$ is independently preferably a hydrogen atom or a hydrocarbon group having a carbon number of 1 to 6, more preferably a hydrogen atom or a methyl group. In the formula (2), the two $R^{22}$ can be the same or different, and a mode where both are hydrogen atoms and a mode where one is a hydrogen atom and the other is a hydrocarbon group having a carbon number of 1 to 6 (preferably a methyl group) are preferred.

In the present embodiment, the structure of the polyphenylene ether can be identified by analyzing with NMR, mass spectrometry, and other techniques.

As a specific method to identify the structure of the polyphenylene ether, field desorption mass spectrometry (FD-MS), which is known to be less prone to fragmentation, can be performed, and the repeating units can be estimated by the intervals of ions detected. Furthermore, the structure of the polyphenylene ether can be estimated by analyses of peaks of fragment ions with electron ionization (EI) in combination with structural analyses by NMR. It can also be determined using analytical methods such as $^{1}$H NMR, for example.

More specifically, the structure of the polyphenylene ether can be identified by a method described in the subsequent EXAMPLES section.

The polyphenylene ether of the present embodiment contains 0.1 to 100 mol% of the repeating unit derived from the phenol of the above formula (1) and 0 to 99.9 mol% of the repeating unit derived from the phenol of the above formula (2), with respect to 100 mol% of the sum of the repeating unit derived from the phenol of the above formula (1) and the repeating unit derived from the phenol of the above formula (2).

From the viewpoint of improving solubility in solvents, preferably 0.1 mol% or more, more preferably 1 mol% or more, and more preferably 20 mol% or more of the repeating unit derived from the phenol of the above formula (1) is contained with respect to 100 mol% of the sum of the repeating unit derived from the phenol of the above formula (1) and the repeating unit derived from the phenol of the above formula (2). When 20 mol% or more of the repeating unit derived from the phenol of the above formula (1) is contained, not only solubility in aromatic solvents is improved but also solubility in ketone-based solvents, etc., in which conventional polyphenylene ethers are insoluble, also tends to improve, .

Preferably 99.9 mol% or less, more preferably 99 mol% or less, and even more preferably 80 mol% or less of the repeating unit derived from the phenol of the above formula (2) is contained with respect to 100 mol% of the sum of the repeating unit derived from the phenol of the above formula (1) and the repeating unit derived from the phenol of the above formula (2).

Furthermore, the content of the repeating unit derived from the phenol of the above formula (2) can be selected according to the application. For example, if heat resistance is required such as in applications for substrate materials, etc.,

a higher amount of the repeating unit derived from the phenol of the above formula (2) within the range where the solvent solubility is maintained is preferred.

The total molar ratio of the repeating unit derived from the phenol of the above formula (1) and the repeating unit derived from the phenol of the above formula (2) with respect to 100 mol% of the polyphenylene ether of the present embodiment is preferably 60 mol% or more, more preferably 80 mol% or more, even more preferably 95 mol% or more, and may even be 100 mol%.

The molar ratios of the repeating unit derived from the phenol of the above formula (1) and the repeating unit derived from the phenol of the above formula (2) with respect to 100 mol% of the sum of the repeating unit derived from the phenol of the above formula (1) and the repeating unit derived from the phenol of the above formula (2) can be determined by analytical methods such as $^1$H-NMR, $^{13}$C-NMR, for example, and more specifically, they can be measured by the method described in the Examples section below.

Because the phenol of the above formula (2) does not have an unsubstituted ortho position (i.e., no hydrogen atom is bonded to the two carbon atoms at ortho positions relative to the carbon atom to which the hydroxyl group is bonded), it can dominantly react with another phenolic monomer at the carbon atom in the para position relative to the phenolic hydroxyl group. Thus, the repeating unit derived from the phenol of the above formula (2) includes a repeating unit having a structure of the following formula (4):

[Chem. 7]

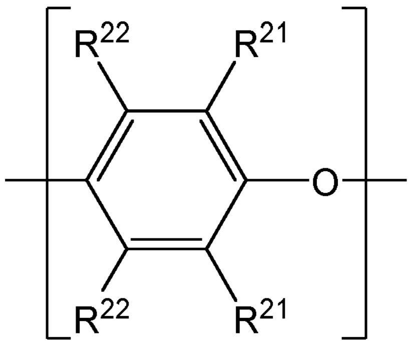

Formula (4)

(in the formula (4), $R^{21}$ to $R^{22}$ are the same as $R^{21}$ to $R^{22}$ in the formula (2).)

The content on a molar basis of the repeating unit having the structure of formula (4) in the repeating unit derived from the phenol of the above formula (2) is suitably 90% or more, more suitably 95% or more, even more suitably 99%, and may be 100%.

On the other hand, $R^{11}$ and $R^{12}$ of the phenol of the above formula (1) are each independently one of a hydrogen atom, a linear saturated hydrocarbon group having a carbon number of 1 to 12, and substituents represented by the above formula (3) (however, $R^{11}$ and $R^{12}$ cannot be both hydrogen atoms), and in a case where one of $R^{11}$ or $R^{12}$ is a hydrogen atom, it can react with another phenolic monomer at either an ortho- or para-position of the phenol, in addition to the phenolic hydroxyl group. Accordingly, the repeating unit derived from the phenol of the above formula (1) includes at least one selected from the group consisting of a structural unit of the following formula (5), a structural unit of the following formula (6), and a structural unit of the following formula (7):

[Chem. 8]

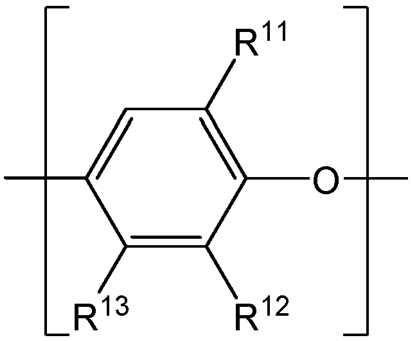

... Formula (5)

[Chem. 9]

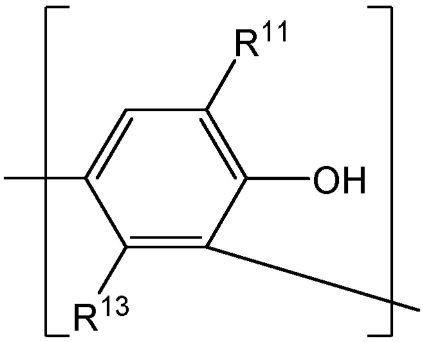

... Formula (6)

[Chem. 10]

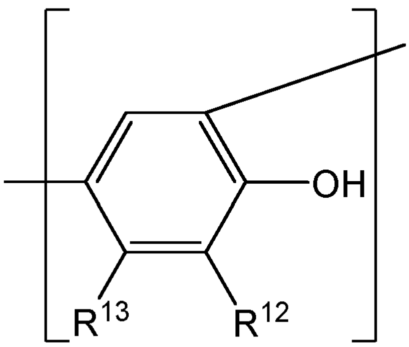

... Formula (7)

($R^{11}$, $R^{12}$, and $R^{13}$ in the formulas (5), (6), and (7) are the same as $R^{11}$, $R^{12}$, and $R^{13}$ in the formula (1).)

The total content on a molar basis of the structural unit of the above formula (5), the structural unit of the above formula (6), and the structural unit of the above formula (7) in the repeating unit derived from the phenol of the above formula (1) is suitably 90% or more, more suitably 95% or more, even more suitably 99%, and may be 100%.

The reduced viscosity ($\eta$sp/c) of the polyphenylene ether in present embodiment measured with an Ubbelohde-type viscosity tube in a chloroform solution at a concentration of 0.5 g/dL at 30 °C is preferably 0.03 to 0.90 dL/g, more preferably 0.05 to 0.60 dL/g. The upper limit of the above reduced viscosity may be 0.60 dL/g or less and 0.40 dL/g or less.

The reduced viscosity can be selected according to the application. For example, in cases where it is desirable to improve the flowability when dissolved in a solvent used to prepare a varnish in the step of applying the varnish to the substrate material, the reduced viscosity is preferably low.

The reduced viscosity can be measured by using the method described in the Examples section below.

The polyphenylene ether in the present embodiment may have at least one substructure selected from the group consisting of the substructure of the following formula (8), the substructure of the following formula (9), the substructure of the following formula (10), and the substructure of the following formula (11):

[Chem. 11]

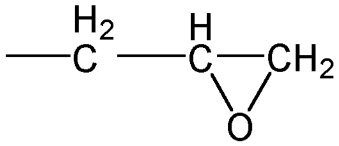

... (8)

[Chem. 12]

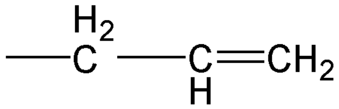

... (9)

[Chem. 13]

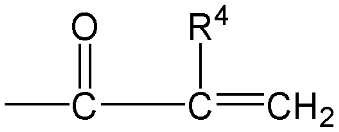

... (10)

(in the formula (10), $R^4$ is a hydrogen atom or a saturated or unsaturated hydrocarbon group having a carbon number of 1 to 10, and the above saturated or unsaturated hydrocarbon may have a substituent to the extent that the total carbon number of $R^4$ is 1 to 10),

[Chem. 14]

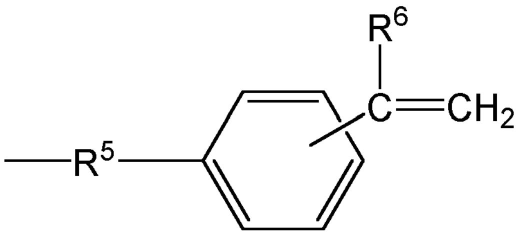

... (11)

(in the formula (11), $R^5$ is a saturated or unsaturated divalent hydrocarbon group having a carbon number of 1 to 10, the above saturated or unsaturated divalent hydrocarbon may have a substituent to the extent that the total carbon number of $R^5$ is 1 to 10, $R^6$ is a hydrogen atom or a saturated or unsaturated hydrocarbon group having a carbon number of 1 to 10, and the saturated or unsaturated hydrocarbon may have substituents to the extent that the total carbon number of $R^6$ is 1 to 10).

Note that at least one substructure selected from the group consisting of the substructure of formula (8), the substructure of formula (9), the substructure of formula (10), and the substructure of formula (11) may be introduced by the modification step described below and may be directly bonded to the oxygen atom of the hydroxyl group in the polyphenylene ether.

<Production method of polyphenylene ether>

The polyphenylene ether of the present embodiment is obtained, for example, by a method that includes at least the step of carrying out oxidative polymerization of a monovalent raw material phenol containing the phenol of the above formula (1). The above step of carrying out oxidative polymerization is preferably a step of carrying out oxidative polymerization of a raw material phenol containing the phenol of the above formula (1) and the phenol of the above formula (2).

Examples of the phenol of the formula (1) include 3-pentadecylphenol, commercially available cardanol, a modified 3-pentadecylphenol where a linear saturated hydrocarbon group having a carbon number of 1 to 12 or a substituent represented by the formula (3) is introduced to 3-pentadecylphenol, and modified cardanol where a linear saturated hydrocarbon group having a carbon number of 1 to 12 or a substituent represented by the formula (3) is introduced to commercially available cardanol. As the substituents introduced into 3-pentadecylphenol or commercially available cardanol, from the viewpoint of suppressing hyperbranching and gelation, it is preferable to introduce a tert-butyl group or a cyclohexyl group, which are bulky substituents, into $R^{11}$, or to introduce a methyl group into both $R^{11}$ and $R^{12}$. Examples of the method of introducing substituents to $R^{11}$ and $R^{12}$ include A) a method by causing reaction of an alkyl halide in the presence of a Lewis acid and B) a method by causing reaction of isobutene, etc. in the presence of a Brønsted acid.

One of the phenols of the formula (1) may be used alone, or two or more of these may be used in combination.

Examples of the phenol of the formula (2) include, for example, 2,6-dimethylphenol, 2-methyl-6-ethylphenol, 2,6-diethylphenol, 2-ethyl-6-n-propylphenol, 2-methyl-6-chlorophenol, 2-methyl-6-bromophenol, 2-methyl-6-n-propylphenol, 2-ethyl-6-bromophenol, 2-methyl-6-n-butylphenol, 2,6-din-propylphenol, 2-ethyl-6-chlorophenol, 2-methyl-6-phenylphenol, 2,6-diphenylphenol, 2-methyl-6-tolylphenol, 2,6-ditolylphenol, 2,3,6-trimethylphenol, 2,3-diethyl-6-n-propylphenol, 2,3,6-tributylphenol, 2,6-di-n-butyl-3-methylphenol, 2,6-dimethyl-3-n-butylphenol, and 2,6-dimethyl-3-t-butylphenol. Of these, 2,6-dimethylphenol, 2,3,6-trimethylphenol, and 2,6-diphenylphenol are particularly preferred because they are inexpensive and readily available.

One of the phenols of the formula (2) may be used alone, or two or more of these may be used in combination.

(Oxidative polymerization step)

Here, in the production method of the polyphenylene ether, an aromatic solvent, which is a good solvent for the polyphenylene ether, can be used as a polymerization solvent in the oxidative polymerization step.

Here, a good solvent of the polyphenylene ether refers to a solvent capable of dissolving the polyphenylene ether, and examples of such a solvent include aromatic hydrocarbons such as benzene, toluene, xylene (including o-, m-, and p-isomers), and ethylbenzene; halogenated hydrocarbons such as chlorobenzene and dichlorobenzene; and nitro compounds such as nitrobenzene, for example.

As the polymerization catalyst used in the present embodiment, well-known catalyst systems which can be generally used for production of polyphenylene ethers can be used. Catalyst systems composed of a transition metal ion having oxidation-reduction capability and an amine compound capable of forming a complex with the transition metal ion are well known, and examples thereof include a catalyst system composed of a copper compound and an amine compound, a catalyst system composed of a manganese compound and an amine compound, and a catalyst system composed of a cobalt compound and an amine compound, for example. Because the polymerization reaction proceeds efficiently under a slight alkaline condition, a small amount of an alkaline or an additional amine compound may be added in the system.

The polymerization catalyst used in the present embodiment is preferably a catalyst composed of a copper compound, a halogen compound, and an amine compound as the components of the catalyst, and more preferably a catalyst containing a diamine compound represented by the following formula (12) as the amine compound. (In the formula (12), $R^{14}$, $R^{15}$, $R^{16}$, and $R^{17}$ are each independently a hydrogen atom or a linear or branched alkyl group having a carbon number of 1 to 6. However, $R^{14}$, $R^{15}$, $R^{16}$, and $R^{17}$ cannot be all hydrogen atoms. $R^{18}$ is an alkylene group having a carbon number of 2 to 5 which is linear or has a methyl branch.)

Examples of the copper compound as the component of the catalyst described herein are listed. The preferred copper compound that can be used may be a cuprous compound, a cupric compound or a mixture thereof. Examples of the cupric compound include cupric chloride, cupric bromide, cupric sulfate, and cupric nitrate. Examples of the cuprous compound include cuprous chloride, cuprous bromide, cuprous sulfate, and cuprous nitrate. Among these metal compounds, cuprous chloride, cupric chloride, cuprous bromide, and cupric bromide are particularly preferable. Copper salts of these may be synthesized from an oxide (for example, cuprous oxide), carbonate, hydroxide, or the like and a corresponding halogen or acid at the time of use. A frequently used method includes preparing a mixture of a cuprous oxide and a hydrogen halide (or a solution of the hydrogen halide) as exemplified above in advance.

Examples of the halogen compound include hydrogen chloride, hydrogen bromide, hydrogen iodide, sodium

chloride, sodium bromide, sodium iodide, potassium chloride, potassium bromide, potassium iodide, tetramethylammonium chloride, tetramethylammonium bromide, tetramethylammonium iodide, tetraethylammonium chloride, tetraethylammonium bromide, and tetraethylammonium iodide, for example. These may be used in the form of an aqueous solution or a solution with an appropriate solvent. These halogen compounds may be used alone, or two or more of these may be used in combination as the component. A preferred halogen compound is an aqueous solution of hydrogen chloride or an aqueous solution of hydrogen bromide.

[Chem. 15]

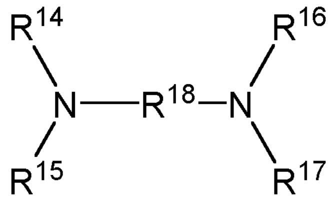

... Formula (12)

The amount of these compounds to be used is not particularly limited, but the amount of halogen atoms is preferably 2 times or more and 20 times or less of the number of moles of copper atoms, and the amount of the copper atoms to be used is preferably in the range of 0.02 mol to 0.6 mol with respect to 100 mol of the phenolic compound to be added in the polymerization reaction.

Next, examples of the diamine compound as the component of the catalyst are listed. Examples include N,N,N',N'-tetramethylethylenediamine, N,N,N'-trimethylethylenediamine, N,N'-dimethylethylenediamine, N,N-dimethylethylenediamine, N-methylethylenediamine, N,N,N',N'-tetraethylethylenediamine, N,N,N'-triethylethylenediamine, N,N'-diethylethylenediamine, N,N-diethylethylenediamine, N-ethylethylenediamine, N,N-dimethyl-N'-ethylethylenediamine, N,N'-dimethyl-N-ethylethylenediamine, N-n-propylethylenediamine, N,N'-n-propylethylenediamine, N-i-propylethylenediamine, N,N'-i-propylethylenediamine, N-n-butylethylenediamine, N,N'-n-butylethylenediamine, N-i-butylethylenediamine, N,N'-i-butylethylenediamine, N-t-butylethylenediamine, N,N'-t-butylethylenediamine, N,N,N',N'-tetramethyl-1,3-diaminopropane, N,N,N'-trimethyl-1,3-diaminopropane, N,N'-dimethyl-1,3-diaminopropane, N-methyl-1,3-diaminopropane, N,N,N',N'-tetramethyl-1,3-diamino-1-methylpropane, N,N,N',N'-tetramethyl-1,3-diamino-2-methylpropane, N,N,N',N'-tetramethyl-1,4-diaminobutane, and N,N,N',N'-tetramethyl-1,5-diaminopentane, for example. Preferred diamine compounds for the present embodiment are those in which the alkylene group connecting two nitrogen atoms has a carbon number of 2 or 3. Although the amount of such a diamine compound that is used is not specifically limited, the amount is preferably in a range of 0.01 mol to 10 mol with respect to 100 mol of the phenolic compound to be added in the polymerization reaction.

In the present embodiment, a primary amine and a secondary monoamine may be included as components of the polymerization catalyst. Examples of the secondary monoamine include, but are not limited to, dimethylamine, diethylamine, di-n-propylamine, di-i-propylamine, di-n-butylamine, di-i-butylamine, di-t-butylamine, dipentylamines, dihexylamines, dioctylamines, didecylamines, dibenzylamines, methylethylamine, methylpropylamine, methylbutylamine, cyclohexylamine, N-phenylmethanolamine, N-phenylethanolamine, N-phenylpropanolamine, N-(m-methylphenyl)ethanolamine, N-(p-methylphenyl)ethanolamine, N-(2',6'-dimethylphenyl)ethanolamine, N-(p-chlorophenyl)ethanolamine, N-ethylaniline, N-butylaniline, N-methyl-2-methylaniline, N-methyl-2,6-dimethylaniline, and diphenylamine, for example.

A tertiary monoamine compound may also be included as a component of the polymerization catalyst in the present embodiment. A tertiary monoamine compound refers to an aliphatic tertiary amine, inclusive of an alicyclic tertiary amine. Examples thereof include trimethylamine, triethylamine, tripropylamine, tributylamine, triisobutylamine, dimethylethylamine, dimethylpropylamine, allyldiethylamine, dimethyl-n-butylamine, diethylisopropylamine, and N-methylcyclohexylamine, for example. These tertiary monoamines may be used alone, or two or more of these may be used in combination. The amount thereof to be used is not particularly limited, but is preferably in a range of 15 mol or less with respect to 100 mol of the phenolic compound to be added to the polymerization reaction.

In the present embodiment, there is no limitation on addition of a surfactant which is conventionally known to have an effect of enhancing polymerization activity. The surfactant may, for example, be trioctylmethylammonium chloride known by the product names Aliquat 336 and CapRiquat. The amount thereof to be used is preferably within a range not exceeding 0.1 mass% with respect to 100 mass% of the total amount of the polymerization reaction mixture.

Examples of oxygen-containing gases for polymerization of the present embodiment include pure oxygen, a mixture of oxygen and an inert gas such as nitrogen in any ratio, air, and a mixture of air and an inert gas such as nitrogen in any ratio, for example. It is suffice that the internal pressure during the polymerization reaction is normal pressure, but a

reduced pressure or an increased pressure may be used if necessary.

The temperature of the polymerization is not particularly limited, but is in the range of 0 to 60 °C, preferably 10 to 40 °C, because the reaction becomes difficult to proceed when the temperature it is too low, whereas the reaction selectivity may be reduced and gel may be generated when it is too high.

In the production method of the polyphenylene ether, polymerization can also be carried out in a poor solvent such as alcohols.

(Copper extraction and by-product removal step)

In the present embodiment, there is no particular limitation on the posttreatments after the polymerization reaction is completed. Typically, an acid such as hydrochloric acid or acetic acid, or ethylenediaminetetraacetic acid (EDTA) and a salt thereof, nitrilotriacetic acid and a salt thereof, or the like is added to the reaction solution for deactivating the catalyst. Further, byproduced dihydric phenol products generated by polymerization of polyphenylene ether can be removed using a conventional well-known method. In the case where metal ions serving as the catalyst have been substantially deactivated as described above, the mixture is decolorized only by heating. A method in which a required amount of a well-known reducing agent is added is also employed. Examples of the well-known reducing agent include hydroquinone and sodium dithionite, for example.

(Liquid-liquid separation step)

In the production method of the polyphenylene ether, water may be added to extract the compound in which the copper catalyst has been deactivated, followed by liquid-liquid separation between the organic phase and the aqueous phase, and the aqueous phase is then separated from the organic phase to remove the copper catalyst. Examples of this liquid-liquid separation step include, but are not particularly limited to, settled separation and separation by a centrifuge. A well-known surfactant or the like may be employed for promoting the liquid-liquid separation described above.

(Concentration and drying step)

Subsequently, in the production method of the polyphenylene ether of the present embodiment, an organic phase containing the above polyphenylene ether obtained after the liquid-liquid separation may be concentrated and dried by volatilizing the solvent.

Examples of the method of volatilizing the solvent contained in the organic phase include, but are not particularly limited to, a method in which the organic phase is transferred to a concentration tank set to a high temperature to distill off the solvent for concentration, and a method in which toluene is distilled off using an instrument such as a rotary evaporator for concentration.

The temperature of drying in the drying step is preferably at least 60 °C or higher, more preferably 80 °C or higher, even more preferably 120 °C or higher, and most preferably 140 °C or higher. Drying of the polyphenylene ether at a temperature of 60 °C or higher can efficiently reduce the content of high boiling point volatile components in the polyphenylene ether powder.

Methods effective for obtaining the polyphenylene ether at high efficiency include raising drying temperature, increasing the degree of vacuum in a drying atmosphere, performing stirring during drying, and the like; among these, particularly preferred from the viewpoint of production efficiency is raising drying temperature. The drying step is preferably carried out using a dryer equipped with a mixing function. The mixing function may be implemented by a stirring-type dryer, a rolling-type dryer, or the like. This increases throughput and maintains high productivity.

The polyphenylene ether of the present embodiment can also be produced by a redistribution reaction in which a polyphenylene ether derived from a phenol of the above formula (2) is equilibrated with a phenolic compound of the above formula (1) in the presence of an oxidizing agent. Redistribution reactions are well-known in the art, and are disclosed, for example, in US 3496236 B to Cooper et al. and US 5880221 B to Liska et al.

(Modification reaction step)

There is no limitation on the method of introducing a functional group into hydroxyl groups of an unmodified polyphenylene ether. For example, it can be achieved by the reaction to form an ester bond between a hydroxyl group of the unmodified polyphenylene ether and a carboxylic acid having a carbon-carbon double bond (hereinafter referred to as "carboxylic acid").

A wide variety of well-known methods can be utilized for forming the ester bond. Examples include methods by: a. reaction of the hydroxyl group at the terminal of the polymer with a carboxylic acid halide; b. formation of an ester bond by reaction with a carboxylic anhydride; c. direct reaction with a carboxylic acid; and d. method by transesterification, for

example.

Among these, a. reaction with a carboxylic acid halide is one of the most common methods. Chlorides and bromides are typically used as the carboxylic acid halide, but other halides may be utilized. The reaction may be either a direct reaction with the hydroxyl group or a reaction of an alkali metal salt of the hydroxyl group. Because an acid such as hydrogen halide is generated in a direct reaction of the hydroxyl group with a carboxylic acid halide, a weak base such as an amine may be added for the purpose of trapping the acid.

In b. reaction with a carboxylic anhydride or c. direct reaction with a carboxylic acid, a compound such as carbodiimides and dimethylaminopyridine, for example, may be added for activating the reaction site to accelerate the reaction.

In the case of d. transesterification reaction, it is desirable to remove produced alcohols if necessary. In addition, a well-known metal catalyst may be added for accelerating the reaction. After the reaction, washing with water or an acidic or alkaline aqueous solution may be carried out for removing byproducts such as amine salts, or the polymer solution may be added dropwise into a poor solvent such as an alcohol to recover the target product by reprecipitation. In addition, after the polymer solution is washed, the solvent may be distilled off under a reduced pressure to recover the polymer.

The production method of the modified polyphenylene ether of the present embodiment is not limited to the production method of the polyfunctional modified polyphenylene ether of the present embodiment described above, and the order and the number of times of the oxidative polymerization step, the copper extraction and by-product removal step, the liquid-liquid separation step, and the concentration and drying step, and the like described above may be appropriately modified.

By way of example, the polyphenylene ether of the present embodiment may be one obtained by, after oxidative polymerization of 3-pentadecylphenol or a commercially available cardanol as phenol of formula (1) and, optionally, 2,6-dimethylphenol as the phenol of the formula (2), introducing at least one substructure selected from the group consisting of the formula (8), formula (9), formula (10), and formula (11) into the obtained polyphenylene ether. Or, the polyphenylene ether of the present embodiment may be one obtained by oxidative polymerization of a modified 3-pentadecylphenol or a modified cardanol as the phenol of the formula (1) and, optionally, 2,6-dimethylphenol as the phenol of the formula (2). Furthermore, the polyphenylene ether of the present embodiment may be one by, after oxidative polymerization of a modified 3-pentadecylphenol or a modified cardanol as the phenol of the formula (1) and optionally 2,6-dimethylphenol as the phenol of the formula (2), introducing at least one substructure selected from the group consisting of the formula (8), formula (9), formula (10), and formula (11) into the obtained polyphenylene ether.

<Thermosetting composition>

The polyphenylene ether of the present embodiment can be used as a raw material for a thermosetting composition. The thermosetting composition of the present embodiment is not limited as long as it contains the polyphenylene ether of the present embodiment. However, it preferably further contain a crosslinking agent and an organic peroxide, and may contain a thermoplastic resin (including polyphenylene ethers other than the polyphenylene ether of the present embodiment), a flame retardant, a silica filler, a solvent, etc. if needed.

The content of the polyphenylene ether of the present embodiment in the thermosetting composition is preferably 0.5 to 95 mass%, more preferably 20 to 93 mass%, and even more preferably 40 to 90 mass%.

The components of the thermosetting composition of the present embodiment will be described below.

(Crosslinking agent)

In the thermosetting composition of the present embodiment, any crosslinking agent capable of causing or promoting a crosslinking reaction can be used.

The crosslinking agent preferably has a number average molecular weight of 4,000 or less. When the average molecular weight of the crosslinking agent is 4,000 or less, the increase in viscosity of the thermosetting composition can be suppressed and good resin flowability during heat molding can be obtained.

Note that the number average molecular weight can be a value measured by a generally-used molecular weight measurement method, and is specifically a value measured by GPC.

In view of crosslinking reactions, the crosslinking agent preferably has two or more carbon-carbon unsaturated double bonds in average per molecule. The cross-linking agent may be composed of one compound or may be composed of two or more compounds.

Note that the term "carbon-carbon unsaturated double bond" as used herein refers to a double bond located at the end of a branch from the main chain when the crosslinking agent is a polymer or an oligomer. Examples of the carbon-carbon unsaturated double bonds are, for example, 1,2-vinyl bonds in polybutadiene.

When the average molecular weight of the crosslinking agent is less than 600, the number (average value) of carbon-carbon unsaturated double bonds per molecule of the crosslinking agent is preferably from 2 to 4. When the

number average molecular weight of the crosslinking agent is 600 or more and less than 1,500, the number (average value) of carbon-carbon unsaturated double bonds per molecule of the crosslinking agent is preferably from 4 to 26. When the number average molecular weight of the crosslinking agent is 1,500 or more and less than 4,000, the number (average value) of carbon-carbon unsaturated double bonds per molecule of the crosslinking agent is preferably from 26 to 60. When the number of carbon-carbon unsaturated double bonds is the above specified value or more in the case where the number average molecular weight of the crosslinking agent is within the above range, the reactivity of the crosslinking agent is further increased in the thermosetting composition of the present embodiment and the crosslinking density of a cured product of the thermosetting composition is further improved, resulting in further excellent heat resistance. On the other hand, when the number of carbon-carbon unsaturated double bonds is the above specified value or less in the case where the number average molecular weight of the crosslinking agent is within the above range, even better resin flowability during heat molding can be provided.

Examples of the cross-linking agent include, for example, trialkenyl isocyanurate compounds such as triaryl isocyanurate (TAIC), trialkenyl cyanurate compounds such as triaryl cyanurate (TAC), polyfunctional methacrylate compounds containing two or more methacrylate groups in the molecule, polyfunctional acrylate compounds containing two or more acrylate groups in the molecule, polyfunctional vinyl compounds containing two or more vinyl groups in the molecule such as polybutadiene, vinylbenzyl compounds containing a vinylbenzyl group in the molecule such as divinylbenzene, and polyfunctional maleimide compounds containing two or more maleimide groups in the molecule such as 4,4'-bis(maleimido)diphenylmethane. One of these cross-linking agents may be used individually, or two or more of these may be used in combination. Among these, the crosslinking agent preferably includes at least one compound selected from the group consisting of triallyl cyanurate, triallyl isocyanurate, and polybutadiene. When the crosslinking agent contains at least one or more of the compounds described above, the thermosetting composition tends to have even better compatibility between the crosslinking agent and the polyphenylene ether and better coatability, and tends to provide even better board characteristics when mounted on an electronic circuit board.

The mass ratio of the polyphenylene ether of the present embodiment to the crosslinking agent (polyphenylene ether of the present embodiment : crosslinking agent) is preferably 25:75 to 95:5, more preferably 32:68 to 85:15 from the viewpoint of compatibility between the crosslinking agent and the polyphenylene ether, the coatability of the thermosetting composition, and further superior characteristics of an electronic circuit board mounted.

(Organic peroxide)

In the present embodiment, any organic peroxide that has the ability to promote the polymerization reaction of the thermosetting composition containing the polyphenylene ether of the present embodiment and the crosslinking agent can be used. Examples of the organic peroxides include, for example, peroxides such benzoyl peroxide, cumene hydroperoxide, 2,5-dimethylhexane-2,5-dihydroperoxide, 2,5-dimethyl-2,5-di(t-butylperoxy)hexyne-3, di-t-butyl peroxide, t-butyl cumyl peroxide, di(2-t-butylperoxyisopropyl)benzene, 2,5-dimethyl-2,5-di(t-butylperoxy)hexane, dicumyl peroxide, di-t-butyl peroxyisophthalate, t-butyl peroxybenzoate, 2,2-bis(t-butylperoxy)butane, 2,2-bis(t-butylperoxy)octane, 2,5-dimethyl-2,5-di(benzoylperoxy)hexane, di(trimethylsilyl) peroxide, and trimethylsilyl triphenylsilyl peroxide. Note that a radical initiator such as 2,3-dimethyl-2,3-diphenylbutane can also be used as a reaction initiator for the thermosetting composition. Among them, 2,5-dimethyl-2,5-di(t-butylperoxy)hexyne-3, di(2-t-butylperoxyisopropyl)benzene, and 2,5-dimethyl-2,5-di(t-butylperoxy)hexane are preferred from the viewpoint of being able to provide cured products having excellent heat resistance and mechanical properties, as well as further lower dielectric dissipation factor (and preferably also having low dielectric constant).

The 1-minute half-life temperature of the organic peroxide is preferably 155 to 185 °C, more preferably 160 to 180 °C, and even more preferably 165 to 175 °C. A one-minute half-life temperature of the organic peroxide in the range of 155 to 185 °C tends to further improve the compatibility between the organic peroxide and a modified PPE, the coatability of the thermosetting composition, and the properties of an electronic circuit board mounted.

Note that, in this specification, the one-minute half-life temperature refers to the temperature at which the time duration during which the amount of reactive oxygen species is halved equals one minute as a result of decomposition of the organic peroxide. The one-minute half-life temperature is a value identified by dissolving an organic peroxide in a solvent that is inert to radicals, such as benzene, to a concentration of 0.05 to 0.1 mol/L, and pyrolyzing the organic peroxide solution in a nitrogen atmosphere.

Examples of organic peroxides with a one-minute half-life temperature in the range of 155 to 185 °C include, for example, t-hexyl peroxyisopropyl monocarbonate (155.0 °C), t-butyl peroxy-3,5,5-trimethylhexanoate (166.0 °C), t-butyl peroxy laurate (159.4 °C), t-butyl peroxyisopropyl monocarbonate (158.8 °C), t-butyl peroxy 2-ethylhexyl monocarbonate (161.4 °C), t-hexyl peroxybenzoate (160.3 °C), 2,5-dimethyl-2,5-di(benzoylperoxy)hexane (158.2 °C), t-butyl peroxyacetate (159.9 °C), 2,2-di(t-butylperoxy)butane (159.9 °C), t-butyl peroxybenzoate (166.8 °C), n-butyl 4,4-di(t-butylperoxy) valerate (172.5 °C), di(2-t-butylperoxyisopropyl)benzene (175.4 °C), dicumyl peroxide (175.2 °C), di-t-hexyl peroxide (176.7 °C), 2,5-dimethyl-2,5-di(t-butylperoxy)hexane (179.8 °C), and t-butylcumyl peroxide (173.3 °C).

The content of the organic peroxide is preferably 0.05 parts by mass or more, more preferably 0.5 parts by mass or more, even more preferably 1 parts by mass or more, and still even more preferably 1.5 parts by mass or more, from the viewpoint of excellent compatibility between the organic peroxide and the modified PPE and excellent coatability of the thermosetting composition, based on 100 parts by mass of the sum of the polyphenylene ether of the present embodiment and the cross-linking agent. From the viewpoint of superior substrate characteristics when the thermosetting composition is mounted on an electronic circuit board, the content is preferably 5 parts by mass or less, more preferably 4.5 parts by mass or less.

(Thermoplastic resin)

The thermoplastic resin is preferably at least one selected from the group consisting of block copolymers of a vinyl aromatic compound and an olefinic alkene compound, hydrogenated products thereof (hydrogenated block copolymers obtained through hydrogenation of block copolymers of a vinyl aromatic compound and an olefinic alkene compound), and a homopolymer of a vinyl aromatic compound.

The weight average molecular weight of the thermoplastic resin is preferably more than 50,000 and 780,000 or less, more preferably 60,000 to 750,000, and even more preferably 70,000 to 700,000 from the viewpoint of compatibility with the polyphenylene ether, resin flowability, coatability of the thermosetting composition of the present embodiment, heat resistance during curing, and the like.

When the thermosetting composition contains the polyphenylene ether of the present embodiment, a cross-linking agent, and an organic peroxide, together with a thermoplastic resin having the types and weight average molecular weights described above, the compatibility between the polyphenylene ether of the present embodiment and the other components and the coatability on a base material etc. tend to be improved, which in turn may lead to excellent substrate properties when incorporated into an electronic circuit board.

Note that the weight average molecular weight can be determined by using the method described in the Examples section below.

The lower limit of the content of units derived from the vinyl aromatic compound in the above block copolymer or the hydrogenated product thereof is preferably 20 mass% or more, and more preferably 22 mass% or more, 24 mass% or more, 26 mass% or more, 28 mass% or more, 30 mass% or more, or 32 mass% or more. The upper limit is preferably 70 mass% or less, more preferably 69 mass% or less, 68 mass% or less, or 67 mass% or less. When the content of units derived from the vinyl aromatic compound in the above block copolymer or the hydrogenated compound thereof is 20 to 70 mass%, the compatibility with the polyphenylene ether of the present embodiment is further improved and/or the adhesion strength with a metal foil tends to be further enhanced.

Any vinyl aromatic compound can be used as long as it has an aromatic ring and a vinyl group in the molecule, such as styrene, for example.

Any olefinic alkene compound can be used as long as the compound has a linear or branched structure in the molecule, and examples include ethylene, propylene, butylene, isobutylene, butadiene, and isoprene, for example.

Specifically, from the viewpoint of further superior compatibility with polyphenylene ether, the thermoplastic resin is preferably at least one selected from the group consisting of styrene-butadiene block copolymers, styrene-ethylene-butadiene block copolymers, styrene-ethylene-butylene block copolymers, styrene-butadiene-butylene block copolymers, styrene-isoprene block copolymers, styrene-ethylene-propylene block copolymers, styrene-isobutylene block copolymers, hydrogenated products of styrene-butadiene block copolymers, hydrogenated products of styrene-ethylene-butadiene block copolymers, hydrogenated products of styrene-butadiene-butylene block copolymers, hydrogenated products of styrene-isoprene block copolymers, and homopolymer of styrene (polystyrene), and is more preferably one or more selected from the group consisting of styrene-butadiene block copolymers, hydrogenated products of styrene-butadiene block copolymers, and polystyrene.

The hydrogenation ratio in the above hydrogenated product is not particularly limited, and a part of carbon-carbon unsaturated double bonds derived from the olefinic alkene compound may remain.

The content of thermoplastic resin is preferably 2 to 20 parts by mass, more preferably 3 to 19 parts by mass, even more preferably 4 to 18 parts by mass, and particularly preferably 5 to 17 parts by mass, based on 100 parts by mass of the sum of the polyphenylene ether of the present embodiment and the crosslinking agent. When this content is within the above numerical range, the thermosetting composition of the present embodiment tends to have even better compatibility between the thermoplastic resin and the polyphenylene ether of the present embodiment and even better coatability, and tends to provide even better board characteristics when mounted on an electronic circuit board.

The thermosetting composition of the present embodiment may also contain a thermoplastic resin other than the thermoplastic resins having the type and weight average molecular weight described above.

(Flame retardant)

The thermosetting composition of the present embodiment preferably includes a flame retardant. The flame retardant is not limited as long as it is incompatible with other components included in the thermosetting composition after the thermosetting composition is cured from the viewpoint of enabling improvement in the heat resistance. The flame retardant is preferably incompatible with the polyphenylene ether of the present embodiment and/or the crosslinking agent in the thermosetting composition after the thermosetting composition is cured.

Examples of the flame retardant include, for example, inorganic flame retardants such as antimony trioxide, aluminum hydroxide, magnesium hydroxide, and zinc borate; aromatic bromine compounds such as hexabromobenzene, decabromodiphenylethane, 4,4-dibromobiphenyl, and ethylene bis-tetrabromophthalimide; and phosphorus flame retardants such as resorcinol bis-diphenyl phosphate and resorcinol bis-dixylenyl phosphate. One of these flame retardants may be used alone, or two or more of these may be used in combination. Among these, decabromodiphenylethane is preferred as the flame retardant from the viewpoint of compatibility between the flame retardant and the modified PPE, coatability of the thermosetting composition, and further superiority in the characteristics of an electronic circuit board mounted.

The content of the flame retardant is not particularly limited, but from the viewpoint of maintaining the flame retardancy in V-0 level of UL Standard 94, it is preferably 5 parts by mass or more, more preferably 10 parts by mass or more, and even more preferably 15 parts by mass or more with respect to the 100 parts by mass of the sum of the polyphenylene ether resin of the present embodiment and the crosslinking agent. Furthermore, from the viewpoint of maintaining low dielectric dissipation factor (preferably further maintaining low dielectric constant) of a resulting cured product, the content of the flame retardant is preferably 50 parts by mass or less, more preferably 45 parts by mass or less, and even more preferably 40 parts by mass or less.

(Silica filler)

The thermosetting composition of the present embodiment may contain silica filler. Examples of the silica filler include, for example, natural silica, fused silica, synthetic silica, amorphous silica, aerosil, and hollow silica.

The content of the silica filler may be 10 to 100 parts by mass with respect to 100 parts by mass of the sum of the polyphenylene ether resin of the present embodiment and the crosslinking agent. The surface of the silica filler may be subjected to surface treatment with a silane coupling agent or the like.

(Solvent)

In view of solubility, preferred solvents are aromatic compounds such as toluene and xylene, methyl ethyl ketone (MEK), cyclopentanone, cyclohexanone, and chloroform. One of these solvents may be used alone, or two or more of these may be used in combination.

The thermosetting composition of the present embodiment can be in the form of a varnish in which the solid components in the thermosetting composition are dissolved or dispersed in a solvent in the case where a solvent is included, and a resin film can be formed from the thermosetting composition of the present embodiment.

<Prepreg>

A prepreg of the present embodiment includes a base material and the thermosetting composition of the present embodiment described above, and is preferably a composite that includes the base material and the thermosetting composition of the present embodiment, where the base material having the thermosetting composition applied on or impregnated with. The prepreg is obtained, for example, by impregnating a base material such as glass cloth with the above thermosetting composition prepared in the form of varnish, and then drying to remove the solvent content using a hot-air dryer or the like.

Examples of the base material include various types of glass cloth such as roving cloth, cloth, chopped mat, and surfacing mat; synthetic or natural inorganic fiber cloth such as asbestos cloth, metal fiber cloth, and the like; woven or non-woven fabrics made from liquid crystal fibers such as fully aromatic polyamide fibers, fully aromatic polyester fibers, and polybenzoxazole fibers; natural fiber cloth such as cotton cloth, linen cloth, and felt; natural cellulose-based base materials such as carbon fiber cloth, kraft paper, cotton paper, and cloth obtained from paper-glass blend yarn; and porous polytetrafluoroethylene films. Among these, glass cloth is preferable. One of these base materials may be used alone, or two or more of these may be used in combination.

The ratio of the solid contents (components other than solvent of the thermosetting composition) of the thermosetting composition of the present embodiment in the prepreg is preferably 30 to 80 mass%, and more preferably 40 to 70 mass%. When the above ratio is 30 mass% or more, the prepreg tends to have even better insulation reliability

when used for an electronic substrate and the like. A above ratio of 80 mass% or less tends to further improve mechanical properties such as bending modulus in applications such as electronic substrates.

<Laminate>

A laminate of the present embodiment includes a cured prepreg of the present embodiment described above and a metal foil, and is preferably a metal clad laminate obtained by laminating the thermosetting composition of the present embodiment or the prepreg of the present embodiment and a metal foil, followed by curing the thermosetting composition or the prepreg. The metal clad laminate is preferably in the form where a cured product of the prepreg (hereinafter also referred to as "cured product composite") and a metal foil are laminated and adhered together, and a metal clad laminate in such a form is suitably used as a material for electronic substrates.

An aluminum foil and a copper foil are examples of the metal foil. Among these, a copper foil is preferred because the electrical resistance is low.

The number of the cured composite to be combined with the metal foil may be one or more, and a metal foil is laminated on one side or both sides of the cured composite depending on the application, which is processed into a metal clad laminate.

A production method of a metal clad laminate includes producing a composite made of a thermosetting composition and a base material (e.g., the prepreg as described above), overlapping the composite with a metal foil, and then curing the thermosetting composition to obtain a clad laminate in which the cured laminate and the metal foil are laminated, for example.

At least a part of the metal foil can be removed from the above metal clad laminate to produce a printed wiring board. The above printed wiring board can typically be formed by performing heat-press molding using the prepreg of the present embodiment described above. The base material may be similar to the base material described above for the prepreg.

Because the above printed wiring board includes the thermosetting composition of the present embodiment, it has excellent heat resistance and electrical properties (low dielectric constant and/or low dielectric dissipation factor). Further, it can suppress fluctuations of electrical properties caused by environmental changes, and it further has excellent insulation reliability and mechanical properties.

EXAMPLES

Hereinafter, although the present embodiments will be described in more detail with reference to Examples, the present embodiments are not limited to the following Examples.

First, the following describes measurement methods and evaluation criteria for the respective physical properties and evaluations.

(1) Reduced viscosity (ηsp/c)

A reduced viscosity (ηsp/c) (dL/g) at 30 °C was determined with an Ubbelohde viscometer, by preparing a 0.5 g/dL chloroform solution of polyphenylene ether.

(2) Molar ratios of repeating unit derived from phenol of formula (1) and repeating unit derived from phenol of formula (2) to 100 mol% of sum of repeating unit derived from phenol of formula (1) and repeating unit derived from phenol of formula (2)

(2-1) A deuterochloroform solution containing 0.5 mass% of an internal standard was prepared by weighing 0.0245 g of 1,3,5-trimethoxybenzene (molecular weight: 168) as the internal standard, and dissolving it in deuterochloroform.

(2-2) A polyphenylene ether solution with a concentration of 5 mass% was prepared by accurately weighing 0.0575 g of each polyphenylene ether obtained in examples and comparative examples and dissolving it in the deuterochloroform containing 0.5 mass% of the internal standard.

(2-3) The polyphenylene ether solution with a concentration of 5 mass% was subjected to a $^1$H-NMR measurement (manufactured by JEOL, 500 MHz, integration count: 512, measurement temperature: room temperature) using chloroform (7.25 ppm) as a chemical shift standard, and the data were analyzed according to the following procedure.

Signals derived from the repeating unit derived from the phenol of the formula (1) and the repeating unit derived from the phenol of the formula (2) were identified and their respective contents were calculated.

For example, for the polyphenylene ethers obtained in Examples 1 to 7, the signals derived from the repeating unit derived from the phenol of the formula (1), i.e., the 2-tert-butyl-cardanol structure, and the signals derived from the repeating unit derived from the phenol of the formula (2), i.e., 2,6-dimethylphenol structure were analyzed by the method described below.

The peaks of the repeating unit derived from the phenol of the formula (1) and the peaks of the repeating unit

derived from the phenol of the formula (2) appear in the following regions.

Peak derived from the hydrogen atoms of the methyl group in the 2-tert-butyl-cardanol unit (3H): 0.80 to 0.96 ppm
Peak derived from the hydrogen atoms of the methylidene group (=$CH_2$) in the 2-tert-butyl-cardanol unit (2H): 4.90 to 5.10 ppm
Peak derived from the hydrogen atoms of the aromatic ring of the 2,6-dimethylphenylene unit (2H): 6.39 to 6.62 ppm

The integral values of the above signals are determined, and the number of moles of the repeating unit derived from the phenol of the formula (1) based on the weight of the polyphenylene ether can be determined using the following formulas (I) to (III).

$$C = \{A \times B / 100\} / 168 \qquad \ldots \text{Formula (I)}$$

$$F = \{((Da / 3) + (Db / 2)) / (E / 9)\} \times C \qquad \ldots \text{Formula (II)}$$

$$H = F / G \times 10^6 \qquad \ldots \text{Formula (III)}$$

The symbols in the formulae are as the follows.

A: The amount (g) of deuterochloroform used for the measurement
B: The concentration (mass %) of the internal standard contained in the deuterochloroform solution
C: The number of moles (mol) of 1,3,5-trimethoxybenzene contained in the solution of polyphenylene ether in deuterochloroform used for the measurement
Da: The integral value of the peak derived from the hydrogen atoms of the methyl group in the 2-tert-butyl-cardanol unit
Db: The integral value of the peak derived from the hydrogen atoms of the methylidene group (=$CH_2$) in the 2-tert-butyl-cardanol unit (2H)
E: The integral value of the peak derived from the hydrogen atoms of the methyl group of 1,3,5-trimethoxybenzene
F: The number of moles (mol) of the repeating unit derived from 2-tert-butyl-cardanol unit in the solution of polyphenylene ether in deuterochloroform used for the measurement
G: The amount (g) of the polyphenylene ether used for the measurement
H: The number of moles (μmol/g) of the repeating unit derived from 2-tert-butyl-cardanol unit based on the weight of the polyphenylene ether

The integral values of the above signals are determined, and the number of moles of the repeating units derived from the repeating unit derived from the phenol of the formula (2) based on the weight of the polyphenylene ether can be determined using the following formulas (IV) to (VI).

$$C = \{A \times B / 100\} / 168 \qquad \ldots \text{Formula (IV)}$$

$$J = \{(I / 2\} / (E / 9)\} \times C \qquad \ldots \text{Formula (V)}$$

$$K = J / G \times 10^6 \qquad \ldots \text{Formula (VI)}$$

The symbols in the formulae are as the follows.

I: The integral value of the peak derived from the hydrogen atoms of the aromatic ring of the 2,6-dimethylphenylene unit
J: The number of moles (mol) of 2,6-dimethylphenylene units in the solution of polyphenylene ether in deuterochloroform used for the measurement
K: The number of moles (μmol/g) of 2,6-dimethylphenylene unit based on the weight of polyphenylene ether

The ratios (mol%) of the repeating unit derived from the phenol of the formula (1) and the repeating unit derived from the phenol of the formula (2) with respect to 100 mol% of the sum of repeating unit derived from the phenol of the formula (1) and repeating unit derived from the phenol of the formula (2) were determined using the formulae (VII) and

(VIII).

The ratio (%) of the repeating unit derived from the phenol of the formula (1):

$$= \{H / (H + K)\} \times 100 \quad \text{... Formula (VII)}$$

The ratio (%) of the repeating unit derived from the phenol of the formula (2)

$$= \{K / (H + K)\} \times 100 \quad \text{... Formula (VIII)}$$

(3) Long-term solubility in methyl ethyl ketone (MEK solubility)

1.5 g of polyphenylene ether and 8.5 g of methyl ethyl ketone were weighed out and placed into a transparent screw tube made of glass. They were mixed at 20 °C using a stirrer and a magnetic stirrer. After one day (24 hours), the determination was made as follows: "O" (good) when the solution remained clear, "X" (poor) when the material was clearly not dissolved or when there was a large amount of insoluble matter, and "Δ" when there was some unsolved matter (slight turbidity).

(4) Long-term solubility to toluene (TL solubility)

2 g of the polyphenylene ether and 8 g of toluene were weighed out and placed into a transparent screw tube made of glass. They were mixed at 20 °C using a stirrer and a magnetic stirrer. After one day (24 hours), the determination was made as follows: "O" (good) when the solution remained clear, "X" (poor) when the material was clearly not dissolved or when there was a large amount of insoluble matter, and "Δ" when there was some unsolved matter (slight turbidity).

(5) Dielectric dissipation factor of cured product of thermosetting composition

The dielectric dissipation factor of each clad laminates produced in Examples and Comparative examples was measured at 10 GHz by the cavity resonance method. A network analyzer (N5230A, manufactured by Agilent Technologies) and a cavity resonator (Cavity Resornator CP series) manufactured by Kanto Electronics Application & Development Inc. were used as the measurement apparatuses. The clad laminate was cut into a strip of approximately 2 mm in width, 50 mm in length, and 0.5 mm in thickness, so that the warp of the glass cloth coincided with the long sides. Next, the strip was placed in an oven at 105 °C ± 2 °C for 2 hours for drying, and then allowed to stand in an environment of 23 °C and a relative humidity of 50 ± 5% for 24 ± 5 hours. The dielectric dissipation factor was then measured under a condition of a frequency of 10 GHz by using the above measurement apparatuses in an environment of 23 °C and a relative humidity of 50 ± 5%.

Hereinafter, a production method of a polyphenylene ether of each of Examples and Comparative examples will be described.

(Production Example 1)

To a 300-mL four-neck flask connected to a Dewar cooler at -10 °C, cardanol (product name LB-7250, manufactured by Tohoku Chemical Industries, Ltd., 50.0 g), p-toluenesulfonic acid monohydrate (0.851 g), and toluene (50 mL) were charged sequentially, which was stirred with a stirring blade. Then, the mixture was heated with an aluminum block heating apparatus with the external temperature set at 65 °C. Isobutene (21.6 g) was introduced over 2 hours and 30 minutes. After the introduction of isobutene, the mixture was stirred at an internal temperature of 60 °C for 2 hours. After the external temperature was raised to 110 °C, a 27% aqueous solution of sodium hydroxide (0.73 g) was added dropwise to the reaction solution. Ion-exchanged water (50 mL) was further added, and the mixture was stirred for 15 minutes and allowed to stand. Since the organic layer was in suspension, ethyl acetate (300 mL) was added to achieve complete dissolution. The organic layer was collected using a separating funnel. The organic layer was washed with saturated brine (200 mL), and the resulting organic layer was dried over magnesium sulfate and concentrated using a rotary evaporator to give a brown oily crude product (60.1 g). The resulting crude product was purified by silica gel column chromatography (column diameter: 100 mm, column height: 16 cm, silica gel: 600 g, developing solvent: heptane/ethyl acetate = 15/1). The resulting fraction was concentrated by a rotary evaporator to give a light yellow oil-like modified cardanol (46.7 g). The structure of the obtained compound was identified by $^1$H-NMR. The result indicated that cardanol having a tert-butyl group introduced to the 2-position of the cardanol raw material before the reaction was the main component.

Cardanol raw material: $^1$H-NMR ($CDCl_3$) δ 7.15-7.10 (m, 1H), 6.78-6.73 (m, 1H), 6.68-6.62 (m, 2H), 5.88-5.77 (m, 0.37H), 5.50-5.29 (m, 3.44H), 5.10-4.95 (m, 0.80H), 4.81-4.64 (m, 1H), 2.88-2.75 (m, 2.14H), 2.55 (t, 2.13H), 2.08-1.98 (m,

3.31H), 1.69-1.53 (m, 3.15H), 1.51-1.12 (m, 14.10H), 0.94-0.85 (m, 1.95H)

Modified cardanol (product): $^1$H-NMR ($CDCl_3$) δ 7.16 (d, 1H), 6.69 (dd, 1H), 6.49 (d, 1H), 5.88-5.77 (m, 0.39H), 5.50-5.29 (m, 3.56H), 5.10-4.95 (m, 0.80H), 4.64 (s, 1H), 2.87-2.75 (m, 2.12H), 2.56-2.46 (m, 2.22H), 2.12-1.95 (m, 3.60), 1.65-1.53 (m, 2.62H), 1.43-1.24 (m, 23.42H), 0.96-0.80 (m, 2.20H)

(Example 1)

A 1.0-liter jacketed reactor equipped with a sparger for the introduction of an oxygen-containing gas, stirred turbine blades, and a baffle at the bottom of the reactor, as well as a refluxing condenser in the vent gas line at the top of the reactor was charged with a pre-prepared mixture of 0.12 g of cuprous oxide and 0.91 g of 47% hydrogen bromide, 0.29 g of N,N'-di-t-butylethylenediamine, 4.31 g of dimethyl-n-butylamine, 1.42 g of di-n-butylamine, phenol raw materials (77.7 g of 2,6-dimethylphenol and 2.29 g of the modified cardanol produced in Example 1), and 713 g of toluene. Next, air was started to be introduced into the reactor from the sparger at a rate of 0.84 L/min while stirring vigorously, and oxygen was introduced at the same time. The polymerization temperature was adjusted to be kept to a temperature of 40 °C by flowing the heat medium through the jacket. The air was stopped to be introduced after 120 minutes after the start of introduction of the air, and 1.30 g of ethylenediaminetetraacetic acid tetrasodium salt tetrahydrate (reagent manufactured by Dojindo Laboratories Co., Ltd.) was added as an aqueous solution in 200 g of water. The temperature was raised to 70 °C and copper extraction was performed at 70 °C for 4 hours. The solution was separated into a polyphenylene ether solution (organic phase) and an aqueous phase to which the catalyst metal had been transferred, by settled separation. The above solution was mixed with methanol with a ratio of methanol to the polymer solution of 10 to precipitate the polymer. Wet polyphenylene ether was obtained by filtration under reduced pressure through a glass filter. The wet polyphenylene ether was further washed with an amount of methanol with a ratio of methanol to the wet polyphenylene ether of 2.5. This washing operation was performed three times. Then, the wet polyphenylene ether was kept at 100 °C and 1 mmHg for 4 hours, and a dry polyphenylene ether was obtained.

The obtained polyphenylene ether was subjected to each measurement by the method described above, and it was confirmed that the modified cardanol had been copolymerized.

The result of each analysis is summarized in Table 1.

(Example 2)

The operations similar to those in Example 1 were carried out, except that 60.4 g of 2,6-dimethylphenol and 19.6 g of the modified cardanol were used as the phenol raw materials.

The result of each analysis is summarized in Table 1.

(Example 3)

The operations similar to those in Example 1 were carried out, except that 46.2 g of 2,6-dimethylphenol and 33.8 g of the modified cardanol were used as the phenol raw materials.

The result of each analysis is summarized in Table 1.

(Example 4)

The operations similar to those in Example 1 were carried out, except that 6.3 g of 2,6-dimethylphenol and 73.7 g of the modified cardanol were used as the phenol raw materials.

The result of each analysis is summarized in Table 1.

(Example 5)

The operations similar to those in Example 1 were carried out, except that 2.9 g of 2,6-dimethylphenol and 77.1 g of the modified cardanol were used as the phenol raw materials.

The result of each analysis is summarized in Table 1.

(Example 6)

The oxidative polymerization, copper extraction, liquid-liquid separation, and concentration using a rotary evaporator were performed in the manner similar to Example 3, and a polymer solution with a polymer concentration of 25 mass% was used as the stock solution (unmodified polyphenylene ether solution A) for the modification reaction.

A 500-mL three-necked flask equipped with a line for introducing nitrogen gas at the top of the reactor and a reflux

condenser in the vent gas line at the top of the reactor was charged with 200 g of the unmodified polyphenylene ether solution A and 0.20 g of 4-dimethylaminopyridine after the inside of the reactor was replaced with nitrogen. Under stirring, 9.3 mL of triethylamine was added using a syringe. Then, 3.2 mL of methacryloyl chloride was measured out in a syringe and dropped into the system at room temperature. The flask was heated in an oil bath for 1 hour after the end of the drop and stirring was continued at 90 °C. Thereafter, the flask was further heated in an oil bath and the reaction was continued under reflux. Heating was stopped after 4 hours elapsed since the start of the reflux. After the system returned to normal temperature, 8 g of methanol was added to stop the reaction. The reaction solution was then filtered through a glass filter to obtain a solution from which the byproduced triethylammonium salt was removed. The above solution was mixed with methanol with a ratio of methanol to the polymer solution of 10 to precipitate the polymer. Wet polyphenylene ether was obtained by filtration under reduced pressure through a glass filter. The wet polyphenylene ether was further washed with an amount of methanol with a ratio of methanol to the wet polyphenylene ether of 2.5. This washing operation was performed three times. Then, the wet polyphenylene ether was kept at 100 °C and 1 mmHg for 8 hours, and a dry polyphenylene ether was obtained. A $^1$H-NMR measurement confirmed the olefin-derived proton peak (5.5 to 6.5 ppm) of a methacryl group, and it was determined that the hydroxyl group was modified to a methacryl group. The result of each analysis is summarized in Table 2.

(Example 7)

To 79 parts by mass of the polyphenylene ether described in Example 6, 20 parts by mass of TAIC (manufactured by Nihon Kasei Co. Ltd.) and 1 part by mass of an organic peroxide (PERBUTYL P, manufactured by NOF CORPORATION) were added to toluene, which was stirred and dissolved to obtain a varnish (solid content concentration: 58 mass%). L-glass cloth (style: 2116 manufactured by Asahi Schuebel) was impregnated with the varnish, and excess varnish was scraped off by passing it through a certain slit. The resultant was then dried in a drying oven at 105 °C for a certain time to remove toluene to obtain a prepreg. The prepreg was cut to a predetermined size and the mass of the prepreg was compared against the mass of glass cloth of the same size, so that the solid content of the thermosetting composition in the prepreg was calculated to be 52 mass%.

The obtained prepregs in a predetermined number were laminated and copper foils (GTS-MP foil, manufactured by Furukawa Electric Co., Ltd., thickness: 35 μm) were overlapped on both sides of the laminated prepregs. The laminate was vacuum pressed to obtain a copper clad laminate. In this vacuum pressing step, the following condition was used. The pressure was first set to the 40 kg/cm$^2$ while heating from room temperature at a rate of 2 °C/min. After the temperature reached 200 °C, the temperature was maintained at 200 °C under a pressure of 40 kg/cm$^2$ and a duration was 60 minutes.

Next, the copper foil of the above copper-clad laminate was etched to obtain a clad laminate (thickness: about 0.5 mm).

The result of each analysis is summarized in Table 3.

(Comparative Example 1)

The operations similar to those in Example 1 were carried out, except that 80 g of 2,6-dimethylphenol was used as the phenol raw material and the air ventilation was stopped 117 minutes after the start of introduction of the air.

The result of each analysis is summarized in Table 1.

(Comparative Example 2)

A 4.1-liter jacketed reactor equipped with a sparger for the introduction of an oxygen-containing gas, stirred turbine blades, and a baffle at the bottom of the reactor, as well as a refluxing condenser in the vent gas line at the top of the reactor was charged with 0.88 g copper chloride dihydrate, 3.76 g of 35% hydrochloric acid, 33.57 g of N,N,N',N'-tetramethylpropanediamine, 850 g of n-butanol and 1982 g of methanol, and 630 g of 2,6-dimethylphenol. The composition weight ratio of the solvents used was n-butanol : methanol = 30:70. Thereafter, simultaneously with start of introduction of oxygen from the sparger at a rate of 410 mL/minute into the reactor under vigorous stirring, the polymerization temperature was adjusted to be kept to a temperature of 40 °C by flowing the heat medium through the jacket. The polymerization solution gradually turned into the form of slurry.

Oxygen was stopped to be introduced after 200 minutes after the start of introduction of oxygen, and a 50% aqueous solution containing 4.56 g of ethylenediamine tetraacetic acid tripotassium salt (reagent manufactured by Dojindo Laboratories Co., Ltd.) was added, and then a 20% methanol solution containing 8.52 g of hydroquinone (reagent manufactured by Wako Pure Chemicals) was added gradually in small quantities. The resulting polymerized liquid was transferred to a 4.1-liter jacketed reactor equipped with stirring turbine blades, a baffle, and a reflux cooler in the vent gas line at the top of the reactor, and reaction was caused to take place at 60 °C for 3 hours. After completion of the reaction, the mixture was filtered and washed 3 times with a methanol washing liquid (b) in an amount such that the mass ratio (b/a) of

the washing liquid (b) to the polyphenylene ether (a) to be washed was 4 to obtain a wet polyphenylene ether. Subsequently, the mixture was vacuum dried at 120 °C for 4 hour to obtain a dry polyphenylene ether.

Table 1 lists the results of the analyses of the resultant polyphenylene ether.

(Comparative Example 3)

A 1.5-liter jacketed reactor equipped with a sparger for the introduction of an oxygen-containing gas, stirred turbine blades, and a baffle at the bottom of the reactor, as well as a refluxing condenser in the vent gas line at the top of the reactor was charged with a pre-prepared mixture of 0.092 g of cuprous oxide and 0.69 g of 47% hydrogen bromide, 0.22 g of N,N'-di-t-butylethylenediamine, 3.27 g of dimethyl-n-butylamine, 1.07 g of di-n-butylamine, 714.65 g of toluene, 65.03 g of 2,6-dimethylphenol, and 14.97 g of 2,2-bis(3,5-dimethyl-4-hydroxyphenyl)propane. Thereafter, simultaneously with start of introduction of air from the sparger at a rate of 0.84 L/minute into the reactor under vigorous stirring, the polymerization temperature was adjusted to be kept to a temperature of 20 °C by flowing the heat medium through the jacket. The air was stopped to be introduced after 150 minutes after the start of introduction of the air, and 0.99 g of ethylenediaminetetraacetic acid tetrasodium salt tetrahydrate (reagent manufactured by Dojindo Laboratories Co., Ltd.) was added to this polymerization mixture as an aqueous solution in 160 g of water. The temperature was then raised to 70 °C and copper extraction was performed at 70 °C for 2 hours. The solution was separated into an unmodified polyphenylene ether solution (organic phase) and an aqueous phase to which the catalyst metal had been transferred, by settled separation. Furthermore, concentration was performed using a rotary evaporator, to thereby prepare a polymer solution with a polymer concentration of 25 mass% to be used as the stock solution (unmodified polyphenylene ether solution B) for the modification reaction.

A 500-mL three-necked flask equipped with a line for introducing nitrogen gas at the top of the reactor and a reflux condenser in the vent gas line at the top of the reactor was charged with 200 g of the unmodified polyphenylene ether solution B and 0.76 g of 4-dimethylaminopyridine after the inside of the reactor was replaced with nitrogen. Under stirring, 34 mL of triethylamine was added using a syringe. Then, 12 mL of methacryloyl chloride was measured out in a syringe and dropped into the system at room temperature. The flask was heated in an oil bath for 1 hour after the end of the drop and stirring was continued at 90 °C. Thereafter, the flask was further heated in an oil bath and the reaction was continued under reflux. Heating was stopped after 4 hours elapsed since the start of the reflux. After the system returned to normal temperature, 8 g of methanol was added to stop the reaction. The reaction solution was then filtered through a glass filter to obtain a solution from which the byproduced triethylammonium salt was removed. The above solution was mixed with methanol with a ratio of methanol to the polymer solution of 10 to precipitate the polymer. Wet polyphenylene ether was obtained by filtration under reduced pressure through a glass filter. The wet polyphenylene ether was further washed with an amount of methanol with a ratio of methanol to the wet polyphenylene ether of 2.5. This washing operation was performed three times. Then, the wet polyphenylene ether was kept at 100 °C and 1 mmHg for 8 hours, and a dry polyphenylene ether was obtained. A $^1$H-NMR measurement confirmed the olefin-derived proton peak of a methacryl group, and it was determined that the hydroxyl group was modified to a methacryl group.

The result of each analysis is summarized in Table 2.

(Comparative Example 4)

A laminate plate was obtained in the same manner as in Example 7, except that the polyphenylene ether described in Comparative Example 3 was used as the raw material.

The result of each analysis is summarized in Table 3.

(Production Example 2)

A $Fe_2O_3$-$SiO_2$-CuO catalyst (metal molar ratio of Fe:Si:Cu = 200:5:1) used for the methylation reaction was synthesized according to the reference, Catalysis Communication 111 (2018) 1000-1003.

Quartz wool (height: 10 mm) was then laid in a glass tube (inner diameter: 20 mm, length: 200 mm), and the catalyst formed into pellets (height: 120 mm) was laid on top of the quartz wool. Furthermore, wool (height: 10 mm) was laid, and glass beads (height: 30 mm) was then laid over the top of the pellets. The catalyst layer was heated to 300 °C with a mantle heater under a nitrogen gas supply (100 mL/min) from the top of the glass tube. A collection flask cooled in an acetone/dry ice bath was placed in the bottom of the glass tube.

A pre-prepared solution of cardanol (product name LB-7250, manufactured by Tohoku Chemical Industries, Ltd.) : methanol : water = 1:5:1.5 (molar ratio) was continuously fed from the top of the glass tube at 0.35 mL/min by a feed pump. The mantle heater was adjusted to achieve a catalyst temperature of 300 °C, and continuous feeding was continued for 2 hours. After 2 hours, 35 g of a solution was collected in a collection flask. After concentration under reduced pressure by an evaporator, 21 g of a crude product was obtained. Further, column purification of the crude product was performed

(developing solvent: mixed solvent of heptane/ethyl acetate = 14/1). The separated solution was concentrated and dried under reduced pressure using an evaporator. This yielded a light yellow oil-like modified cardanol. The structure of the obtained compound was identified by $^1$H-NMR. The result indicated that cardanol in which methyl groups were introduced at the 2- and 6-positions of the cardanol raw material before the reaction, and the double bond site of the side chain was also methylated as indicated by disappearance of the signal derived from the double bond site of the side chain, was the main component.

Modified cardanol (product): $^1$H-NMR ($CDCl_3$) δ 6.90-6.80 (d, 1.00H), 6.70-6.60 (d, 1.04H), 5.50-5.29 (m, 1.89H), 4.64 (s, 1.11H), 2.60-2.40 (m, 2.39H), 2.30-2.10 (m, 7.85H), 2.10-1.90 (m, 4.35H)1.70-1.51 (m, 3.85H), 1.51-1.12 (m, 20.88H), 0.96-0.80 (m, 3.50H)

[Example 8]

The operations similar to those in Example 1 were carried out, except that 61.6 g of 2,6-dimethylphenol and 18.4 g of the modified cardanol produced in the production example 2 were used as the phenol raw materials.

The result of each analysis is summarized in Table 1.

[Table 1]

| | | | Example 1 | Example 2 | Comp. Ex. 1 | Example 3 | Example 4 | Example 5 | Comp. Ex. 2 | Example 8 |
|---|---|---|---|---|---|---|---|---|---|---|
| Phenol of formula (1) used | | | Production Example 1 | Production Example 1 | Production Example 1 | Production Example 1 | Production Example 1 | Production Example 1 | - | |
| Polymerization composition | Phenol of formula (1) | mol% | 1 | 10 | 0 | 20 | 80 | 90 | 0 | *1 |
| | Phenol of formula (2) | mol% | 99 | 90 | 100 | 80 | 20 | 10 | 100 | *1 |
| | Reduced viscosity | dL/g | 0.34 | 0.22 | 0.29 | 0.14 | 0.06 | 0.05 | 0.09 | 0.22 |
| Analysis of Product | Repeating unit derived from phenol of formula (1) (component containing methyl group) | μmol/g | 110 | 555 | 0 | 715 | 1575 | 1705 | 0 | 770 |
| | Repeating unit derived from phenol of formula (1) (component containing methylidene group) | μmol/g | 22 | 110 | 0 | 200 | 312 | 338 | 0 | 0 |
| | Repeating unit derived from phenol of formula (1) (Total) | μmol/g | 132 | 665 | 0 | 915 | 1887 | 2043 | 0 | 770 |
| | Repeating unit derived from phenol of formula (2) | μmol/g | 7400 | 5076 | 8039 | 3157 | 586 | 249 | 7053 | 5100 |
| | Ratio of repeating unit derived from phenol of formula (1) | mol% | 2 | 12 | 0 | 22 | 76 | 89 | 0 | 13 |
| | Ratio of repeating unit derived from phenol of formula (2) | mol% | 98 | 88 | 100 | 78 | 24 | 11 | 100 | 87 |
| | Presence or absence of partial structure represented by formulae (8), (9), (10) and (11) | - | None | None | None | None | None | None | None | None |
| | Long-term solubility in methyl ethyl ketone (Concentration: 15wt%, 20 °C) | - | X | X | × | ○ | ○ | ○ | △ | X |
| | Long-term solubility in toluene (Concentration: 20wt%, 20 °C) | - | ○ | ○ | × | ○ | ○ | ○ | ○ | ○ |

*1 Since double bond of side chain of phenol of formula (1) was also methylated and exact molecular weight was unknown (moles could not be calculated), composition in molar ratio is not

[Table 2]

| | | | Example 6 | Comparative Example 3 |
|---|---|---|---|---|
| Polymerization composition | Phenol of formula (1) | mol% | 20 | 2,6-dimethylphenol : 2,2-bis(3,5-dimethyl-4-hydroxyphenyl)propane = 91:9 |
| | Phenol of formula (2) | mol% | 80 | |
| Analysis of product | Reduced viscosity | dL/g | 0.14 | 0.09 |
| | Repeating unit derived from phenol of formula (1) | μmol/g | 715 | - |
| | Repeating unit derived from phenol of formula (1) (component containing methylidene group) | μmol/g | 200 | - |
| | Repeating unit derived from phenol of formula (1) (Total) | μmol/g | 915 | - |
| | Repeating unit derived from phenol of formula (2) | μmol/g | 3157 | - |
| | Ratio of repeating unit derived from phenol of formula (1) | mol% | 22 | - |
| | Ratio of repeating unit derived from phenol of formula (2) | mol% | 78 | - |
| | Presence or absence of partial structure represented by formulae (8), (9), (10) and (11) | | Present (Formula 10) | Present (Formula 10) |
| | Long-term solubility in methyl ethyl ketone (Concentration: 15wt%, 20 °C) | - | ○ | ○ |
| | Long-term solubility in toluene (Concentration: 20wt%, 20 °C) | - | ○ | ○ |

[Table 3]

| | | Example 7 | Comparative Example 4 |
|---|---|---|---|
| Raw material | Type of PPE used | PPE described in Example 6 | PPE described in Comparative Example 3 |
| Analysis of cured product of thermosetting composition | Dielectric dissipation factor (@10GHz) | 0.00325 | 0.00399 |

As indicated in Tables 1, 2, and 3, comparison of Examples 1, 2, and 8 with Example 1 indicated that polyphenylene ethers having enhanced solubility in toluene and various reduced viscosities were provided. Comparison of Examples 3 to 5 with Comparative Examples 1 and 2 indicated that polyphenylene ethers having enhanced solubility in methyl ethyl ketone and various reduced viscosities were provided. Comparison of Example 6 with Example 3 indicated that a polyphenylene ether with long-term solubility comparable to that of known polyphenylene ethers known to have excellent long-term solubility in general-purpose solvents were provided. In addition, comparison of Example 7 with Example 4 indicated that the polyphenylene ether of the present disclosure is useful as a substrate material excellent in dielectric dissipation factor.

INDUSTRIAL APPLICABILITY

Since the polyphenylene ether of the present disclosure has excellent solvent solubility, it is industrially useful in electronic material applications and modifier applications.

## Claims

1. A polyphenylene ether comprising a repeating unit derived from a phenol of the formula (1):

[Chem. 1]

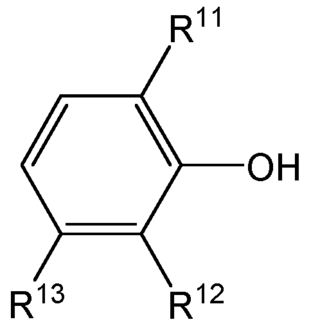

... Formula (1)

(in the formula (1), $R^{13}$ is an optionally substituted saturated or unsaturated hydrocarbon group having a carbon number of 15, $R^{11}$ and $R^{12}$ are each independently one of a hydrogen atom, a linear saturated hydrocarbon group having a carbon number of 1 to 12, and substituents represented by the following formula (3), where $R^{11}$ and $R^{12}$ cannot be both hydrogen atoms):

[Chem. 2]

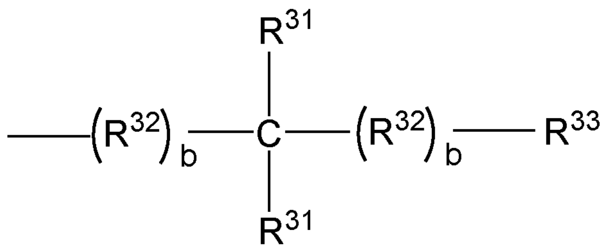

... Formula (3)

(in the formula (3), each $R^{31}$ is independently an optionally substituted linear alkyl group having a carbon number of 1 to 8, or atoms in the two $R^{31}$ are bonded together to form a cyclic alkyl group with a carbon number of 1 to 8, each $R^{32}$ is independently an optionally substituted alkylene group having a carbon number of 1 to 8, b is each independently 0 or 1, and $R^{33}$ is a hydrogen atom, an optionally substituted alkyl group having a carbon number of 1 to 8, or an optionally substituted phenyl group).

2. The polyphenylene ether according to claim 1, comprising the repeating unit derived from the phenol of the formula (1) and a repeating unit derived from a phenol of the formula (2):

[Chem. 3]

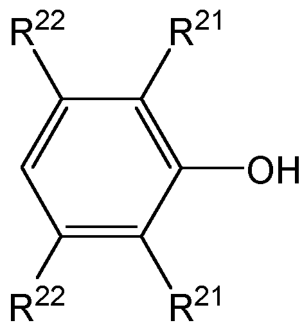

... Formula (2)

(in the formula (2), each $R^{21}$ is independently an optionally substituted saturated hydrocarbon group having a carbon number of 1 to 6, an optionally substituted aryl group having a carbon number of 6 to 12, or a halogen atom, and each $R^{22}$ is independently a hydrogen atom, an optionally substituted hydrocarbon group having a carbon number of 1 to 6, an optionally substituted aryl group having a carbon number of 6 to 12, or a halogen atom).

**3.** The polyphenylene ether according to claim 2, comprising 0.1 to 100 mol% of the repeating unit derived from the phenol of the formula (1) and 0 to 99.9 mol% of the repeating unit derived from the phenol of the formula (2), with respect to 100 mol% of a sum of the repeating unit derived from the phenol of the formula (1) and the repeating unit derived from the phenol of the formula (2).

**4.** The polyphenylene ether according to claim 3, comprising 20 to 100 mol% of the repeating unit derived from the phenol of the formula (1) and 0 to 80 mol% of the repeating unit derived from the phenol of the formula (2), with respect to 100 mol% of the sum of the repeating unit derived from the phenol of the formula (1) and the repeating unit derived from the phenol of the formula (2).

**5.** The polyphenylene ether according to claim 1 or 2, wherein a reduced viscosity (ηsp/c) measured with an Ubbelohde-type viscosity tube in a chloroform solution at a concentration of 0.5 g/dL at 30 °C is 0.03 to 0.90 dL/g.

**6.** The polyphenylene ether according to claim 1 or 2, wherein the $R^{11}$ is a t-butyl group and the $R^{12}$ is a hydrogen atom.

**7.** A method of producing the polyphenylene ether according to claim 1 or 2, the method comprising the step of carrying out oxidative polymerization of the phenol of the formula (1).

**8.** A thermosetting composition comprising the polyphenylene ether according to any one of claims 1 to 2.

**9.** A prepreg comprising a base material and the thermosetting composition according to claim 8.

**10.** The prepreg according to claim 9, wherein the base material is glass cloth.

**11.** A laminate comprising a cured product of the prepreg according to claim 9 or 10 and a metal foil.

**Patentansprüche**

**1.** Polyphenylenether, umfassend eine sich wiederholende Einheit, die von einem Phenol der Formel (1) abgeleitet ist:

[Chem. 1]

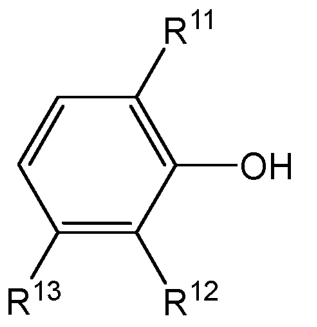

... Formel (1)

(in der Formel (1) ist $R^{13}$ eine optional substituierte, gesättigte oder ungesättigte Kohlenwasserstoffgruppe mit einer Kohlenstoffzahl von 15, $R^{11}$ und $R^{12}$ sind jeweils unabhängig eines, ausgewählt aus einem Wasserstoffatom, einer linearen gesättigten Kohlenwasserstoffgruppe mit einer Kohlenstoffzahl von 1 bis 12 und Substituenten der folgenden Formel (3), wobei $R^{11}$ und $R^{12}$ nicht beide Wasserstoffatome sein können):

[Chem. 2]

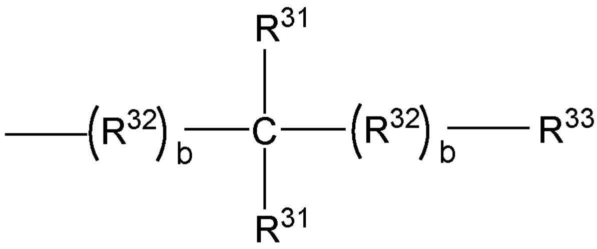

... Formel (3)

(in der Formel (3) ist jedes $R^{31}$ unabhängig eine optional substituierte lineare Alkylgruppe mit einer Kohlenstoffzahl von 1 bis 8, oder Atome in den beiden $R^{31}$ sind miteinander unter Bildung einer cyclischen Alkylgruppe mit Kohlenstoffzahl von 1 bis 8 verbunden, jedes $R^{32}$ ist unabhängig eine optional substituierte Alkylengruppe mit einer Kohlenstoffzahl von 1 bis 8, b ist jeweils unabhängig 0 oder 1, und $R^{33}$ ist ein Wasserstoffatom, eine optional substituierte Alkylgruppe mit einer Kohlenstoffzahl von 1 bis 8 oder eine optional substituierte Phenylgruppe).

**2.** Polyphenylenether nach Anspruch 1, umfassend die von dem Phenol der Formel (1) abgeleitete sich wiederholende Einheit und eine von einem Phenol der Formel (2) abgeleitete sich wiederholende Einheit:

[Chem. 3]

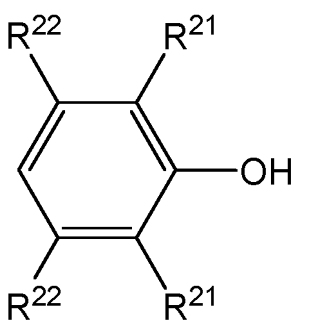

... Formel (2)

(in der Formel (2) ist jedes $R^{21}$ unabhängig eine optional substituierte gesättigte Kohlenwasserstoffgruppe mit einer Kohlenstoffzahl von 1 bis 6, eine optional substituierte Arylgruppe mit einer Kohlenstoffzahl von 6 bis 12 oder ein Halogenatom, und jedes $R^{22}$ ist unabhängig ein Wasserstoffatom, eine optional substituierte Kohlenwasserstoffgruppe mit einer Kohlenstoffzahl von 1 bis 6, eine optional substituierte Arylgruppe mit einer Kohlenstoffzahl von 6 bis 12 oder ein Halogenatom).

**3.** Polyphenylenether nach Anspruch 2, umfassend 0,1 bis 100 Mol-% der von dem Phenol der Formel (1) abgeleiteten sich wiederholenden Einheit und 0 bis 99,9 Mol-% der von dem Phenol der Formel (2) abgeleiteten sich wiederholenden Einheit, bezogen auf 100 Mol-% der Summe der von dem Phenol der Formel (1) abgeleiteten sich wiederholenden Einheit und der von dem Phenol der Formel (2) abgeleiteten sich wiederholenden Einheit.

**4.** Polyphenylenether nach Anspruch 3, enthaltend 20 bis 100 Mol-% der von dem Phenol der Formel (1) abgeleiteten sich wiederholenden Einheit und 0 bis 80 Mol-% der von dem Phenol der Formel (2) abgeleiteten sich wiederholenden Einheit, bezogen auf 100 Mol-% der Summe der von dem Phenol der Formel (1) abgeleiteten sich wiederholenden Einheit und der von dem Phenol der Formel (2) abgeleiteten sich wiederholenden Einheit.

**5.** Polyphenylenether nach Anspruch 1 oder 2, wobei die reduzierte Viskosität (ηsp/c), gemessen mit einem Viskositätsrohr vom Ubbelohde-Typ in einer Chloroformlösung bei einer Konzentration von 0,5 g/dl bei 30 °C, 0,03 bis 0,90 dl/g beträgt.

**6.** Polyphenylenether nach Anspruch 1 oder 2, wobei $R^{11}$ eine t-Butylgruppe ist und $R^{12}$ ein Wasserstoffatom ist.

**7.** Verfahren zur Herstellung des Polyphenylenethers nach Anspruch 1 oder 2, wobei das Verfahren den Schritt des Durchführens einer oxidativen Polymerisation des Phenols der Formel (1) umfasst.

**8.** Wärmehärtbare Zusammensetzung, welche den Polyphenylenether nach einem der Ansprüche 1 bis 2 enthält.

**9.** Prepreg, welches ein Basismaterial und die wärmehärtbare Zusammensetzung nach Anspruch 8 enthält.

**10.** Prepreg nach Anspruch 9, wobei das Basismaterial Glasgewebe ist.

**11.** Laminat, umfassend ein gehärtetes Produkt des Prepregs nach Anspruch 9 oder 10 und eine Metallfolie.

## Revendications

**1.** Éther de polyphénylène comprenant une unité de répétition dérivée d'un phénol de formule (1) :

[Chem. 1]

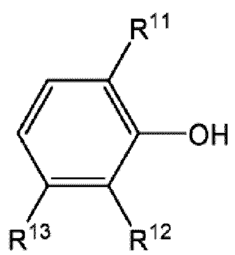

... Formule (1)

(dans la formule (1), $R^{13}$ est un groupe hydrocarboné saturé ou insaturé éventuellement substitué ayant un nombre de carbones de 15, $R^{11}$ et $R^{12}$ sont chacun indépendamment un élément parmi un atome d'hydrogène, un groupe hydrocarboné saturé linéaire ayant un nombre de carbones de 1 à 12, et des substituants représentés par la formule (3) suivante, où $R^{11}$ et $R^{12}$ ne peuvent pas être tous les deux des atomes d'hydrogène) :

[Chem. 2]

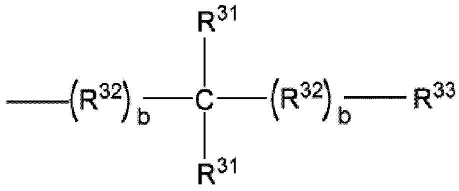

... Formule (3)

(dans la formule (3), chaque $R^{31}$ est indépendamment un groupe alkyle linéaire éventuellement substitué ayant un nombre de carbones de 1 à 8, ou les atomes dans les deux $R^{31}$ sont liés ensemble pour former un groupe alkyle cyclique avec un Nombre de carbones de 1 à 8, chaque $R^{32}$ est indépendamment un groupe alkylène éventuellement substitué ayant un nombre de carbones de 1 à 8, b est chacun indépendamment 0 ou 1, et $R^{33}$ est un atome d'hydrogène, un groupe alkyle éventuellement substitué ayant un nombre de carbones de 1 à 8, ou un groupe phényle éventuellement substitué).

**2.** Éther de polyphénylène selon la revendication 1, comprenant l'unité de répétition dérivée du phénol de formule (1) et une unité de répétition dérivée d'un phénol de formule (2) :

[Chem. 3]

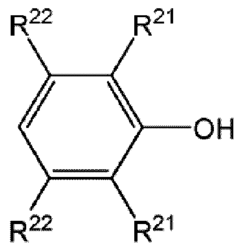

... Formule (2)

(dans la formule (2), chaque $R^{21}$ est indépendamment un groupe hydrocarboné saturé éventuellement substitué ayant un nombre de carbones de 1 à 6, un groupe aryle éventuellement substitué ayant un nombre de carbones de 6 à 12, ou un atome d'halogène, et chaque $R^{22}$ est indépendamment un atome d'hydrogène, un groupe hydrocarboné éventuellement substitué ayant un nombre de carbones de 1 à 6, un groupe aryle éventuellement substitué ayant un nombre de carbones de 6 à 12, ou un atome d'halogène).

**3.** Éther de polyphénylène selon la revendication 2, comprenant 0,1 à 100 % en moles de l'unité de répétition dérivée du phénol de formule (1) et 0 à 99,9 % en moles de l'unité de répétition dérivée du phénol de formule (2), par rapport à 100 % en moles d'une somme de l'unité de répétition dérivée du phénol de formule (1) et de l'unité de répétition dérivée du phénol de formule (2).

**4.** Éther de polyphénylène selon la revendication 3, comprenant 20 à 100 % en moles de l'unité de répétition dérivée du phénol de formule (1) et 0 à 80 % en moles de l'unité de répétition dérivée du phénol de formule (2), par rapport à 100 % en moles de la somme de l'unité de répétition dérivée du phénol de formule (1) et de l'unité de répétition dérivée du phénol de formule (2).

**5.** Éther de polyphénylène selon la revendication 1 ou 2, dans lequel une viscosité réduite ($\eta$sp/c) mesurée avec un tube de viscosité de type Ubbelohde dans une solution de chloroforme à une concentration de 0,5 g/dL à 30°C est comprise de 0,03 à 0,90 dL/g.

**6.** Éther de polyphénylène selon la revendication 1 ou 2, dans lequel le $R^{11}$ est un groupe t-butyle et le $R^{12}$ est un atome d'hydrogène.

**7.** Procédé destiné à produire l'éther de polyphénylène selon la revendication 1 ou 2, le procédé comprenant l'étape destinée à réaliser une polymérisation oxydative du phénol de formule (1).

**8.** Composition thermodurcissable comprenant l'éther de polyphénylène selon l'une quelconque des revendications 1 à

2.

**9.** Préimprégné comprenant un matériau de base et la composition thermodurcissable selon la revendication 8.

**10.** Préimprégné selon la revendication 9, dans lequel le matériau de base est du tissu de verre.

**11.** Stratifié comprenant un produit durci du préimprégné selon la revendication 9 ou 10 et une feuille métallique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004099824 A
- JP 2004339328 A
- JP 2008510059 A
- US 2009018303 A
- US 3496236 B, Cooper
- US 5880221 B, Liska


### Non-patent literature cited in the description


- *Catalysis Communication*, 2018, vol. 111, 1000-1003